# EUROPEAN PATENT APPLICATION

(11) **EP 4 814 723 A1**
(43) Date of publication of application: **30.09.2026**
(21) Application number: 24899803.1
(22) Date of filing: 03.12.2024
(51) Int. Cl.: G06F 11/14

(54) **DATA PROCESSING METHOD AND COMPUTER DEVICE**

(30) Priority: 07.12.2023 CN 202311690461
(71) Applicant: Huawei Technologies Co., Ltd., Shenzhen, Guangdong 518129 (CN)
(72) Inventor: BAO, Xiaoming, Shenzhen, Guangdong 518129 (CN); XU, Hua, Shenzhen, Guangdong 518129 (CN); ZHAO, Shixiong, Shenzhen, Guangdong 518129 (CN)
(74) Representative: Gill Jennings & Every LLP
(86) International application number: PCT/CN2024/136412
(87) International publication number: WO 2025/119165

(57) **Abstract**

A data processing method and a computer device are disclosed, relating to the field of artificial intelligence. At least two dedicated processors include datasets in optimizer data globally, that is, at least two copies of the optimizer data are deployed globally, thereby achieving multiple replicas of the optimizer data globally. In addition, the datasets in the optimizer data included in the dedicated processors are updated through gradient transmission between the dedicated processors, that is, the multiple replicas of the optimizer data are updated by "computation instead of transmission", thereby ensuring integrity of the optimizer data at any time. When a dedicated processor is faulty, since a system includes multiple copies of the optimizer data, complete optimizer data can be formed from datasets included in non-faulty dedicated processors, thereby ensuring accuracy of a final checkpoint, so as to facilitate resumption of model training based on the final checkpoint and reduce training loss.

## Description

This application claims priority to Chinese Patent Application No. 202311690461.1, filed with the China National Intellectual Property Administration on December 7, 2023, and entitled "DATA PROCESSING METHOD AND COMPUTER DEVICE", which is incorporated herein by reference in its entirety.

### TECHNICAL FIELD

This application relates to the field of artificial intelligence, and in particular, to a data processing method and a computer device.

### BACKGROUND

Currently, an artificial intelligence (Artificial Intelligence, AI) model with a relatively large quantity of parameters is cooperatively trained by multiple processors. For example, a large language model (Large Language Model, LLM) is trained in a distributed manner across multiple machines and multiple cards, where the training of the LLM may last several months. To prevent interruptions of model training caused by failures of processors, networks, software, or the like, checkpoint information in the model training process may be periodically saved. For example, the checkpoint information includes model parameters and optimizer data.

However, among the multiple processors, each processor stores only a portion of the optimizer data, the portions of the data stored by the respective processors are different, such that there is only one global copy. The data stored by the multiple processors together constitute the complete optimizer data. If a processor is faulty, the portion of the optimizer data stored in the processor may be lost, resulting in incomplete optimizer data, which in turn causes the checkpoint information to be inaccurate and wastes the time spent on model training.

### SUMMARY

This application provides a data processing method and a computer device, to ensure integrity of optimizer data when a processor is faulty.

According to a first aspect, a data processing method is provided. The method is applied to a computing system including a general-purpose processor and multiple dedicated processors. The multiple dedicated processors are configured to train an artificial intelligence model. The multiple dedicated processors include at least two copies of optimizer data, the optimizer data includes a first dataset, and each of at least two dedicated processors includes the first dataset. For example, the multiple dedicated processors include a first dedicated processor and a second dedicated processor, and both the first dedicated processor and the second dedicated processor include the first dataset. The method includes: The first dedicated processor trains the artificial intelligence model to obtain a first gradient; the first dedicated processor updates the first dataset based on the first gradient, to obtain an updated first dataset; the second dedicated processor updates the first dataset based on the first gradient, to obtain the updated first dataset; and when the second dedicated processor is faulty, the general-purpose processor instructs to persist datasets included in multiple non-faulty dedicated processors, where the datasets contained in the multiple non-faulty dedicated processors constitute updated optimizer data, the multiple non-faulty dedicated processors include the first dedicated processor, and the updated optimizer data includes the updated first dataset.

Compared with a case in which only a single copy of optimizer data is maintained globally, and a fault of a dedicated processor leads to an inaccurate final checkpoint and incomplete optimizer data, in the method provided in this application, the at least two dedicated processors include datasets in the optimizer data globally, that is, at least two copies of the optimizer data are deployed globally, thereby achieving multiple replicas of the optimizer data globally. In addition, the datasets in the optimizer data included in the dedicated processors are updated through gradient transmission between the dedicated processors, that is, the multiple replicas of the optimizer data are updated by "computation instead of transmission", thereby ensuring integrity of the optimizer data at any time. When a dedicated processor is faulty, since the system includes multiple replicas of the optimizer data, the datasets included in the non-faulty dedicated processors may constitute the complete optimizer data, thereby improving reliability of the optimizer data and ensuring accuracy of a final checkpoint, so as to facilitate resumption of model training based on the final checkpoint and reduce training loss.

In a possible implementation, the method further includes: The first dedicated processor obtains an initial value of the first dataset configured by the general-purpose processor; and the second dedicated processor obtains the initial value of the first dataset sent by the first dedicated processor.

In this way, it is ensured that each of the at least two dedicated processors includes the same dataset.

In another possible implementation, the method further includes: The first dedicated processor transmits the first gradient to the second dedicated processor.

In this way, the dedicated processors including the same dataset obtain the gradient and update the dataset, to ensure that the at least two dedicated processors include the same updated dataset. Because an amount of the optimizer data is relatively large, and an amount of data of the gradient is relatively small, transmitting the gradient can reduce bandwidth usage and an amount of transmitted data.

In another possible implementation, the optimizer data further includes a second dataset, the multiple dedicated processors include a third dedicated processor and a fourth dedicated processor, and both the third dedicated processor and the fourth dedicated processor include the second dataset.

It may be understood that the first dataset included in the first dedicated processor and the second dataset included in the third dedicated processor constitute the complete optimizer data. The first dataset included in the second dedicated processor and the second dataset included in the fourth dedicated processor constitute the complete optimizer data.

In this way, the at least two dedicated processors include datasets in the optimizer data globally, that is, at least two copies of the optimizer data are deployed globally, thereby achieving multiple replicas of the optimizer data globally.

In another possible implementation, the method further includes: The third dedicated processor trains the artificial intelligence model to obtain a second gradient; the third dedicated processor updates the second dataset based on the second gradient, to obtain an updated second dataset; the fourth dedicated processor obtains the second gradient from the third dedicated processor; and the fourth dedicated processor updates the second dataset based on the second gradient, to obtain the updated second dataset.

In this way, the multiple replicas of the optimizer data are updated by "computation instead of transmission", thereby ensuring integrity of the optimizer data at any time.

In another possible implementation, that the general-purpose processor instructs to persist the datasets contained in the multiple non-faulty dedicated processors includes: obtaining integrity information sent by the non-faulty dedicated processors in the computing system, where the integrity information indicates integrity of the datasets included in the non-faulty dedicated processors; determining, based on the integrity information sent by the non-faulty dedicated processors in the computing system, that the datasets contained in the multiple non-faulty dedicated processors constitute the updated optimizer data; and sending a persistence command to the multiple non-faulty dedicated processors, where the persistence command instructs to persist the datasets included in the multiple non-faulty dedicated processors.

In this way, the general-purpose processor determines, based on integrity information of data included in the dedicated processors, the dedicated processors whose datasets can constitute the complete optimizer data, thereby ensuring integrity of the optimizer data when a dedicated processor is faulty, improving reliability of the optimizer data, and ensuring accuracy of the final checkpoint, so as to facilitate resumption of model training based on the final checkpoint and reduce the training loss.

In another possible implementation, the integrity information includes identifiers and correctness information of data in the datasets; and determining, based on the integrity information sent by the non-faulty dedicated processors in the computing system, that the datasets contained in the multiple non-faulty dedicated processors constitute the updated optimizer data includes: determining multiple consecutive identifiers based on the identifiers included in the integrity information sent by the non-faulty dedicated processors in the computing system, where data indicated by the multiple consecutive identifiers constitutes the updated optimizer data; determining, based on the correctness information included in the integrity information, that the data indicated by the multiple consecutive identifiers is correct; and determining non-faulty dedicated processors in which the data indicated by the multiple consecutive identifiers is located as the multiple non-faulty dedicated processors whose datasets constitute the updated optimizer data.

In another possible implementation, the integrity information further includes iteration counts of data in the datasets included in the non-faulty dedicated processors; and the method further includes: determining, based on the iteration counts included in the integrity information, that iteration counts of the data indicated by the multiple consecutive identifiers are the same.

In this way, based on the data iteration counts, it is ensured that the complete optimizer data is formed based on latest data.

In another possible implementation, after the general-purpose processor instructs to persist the datasets included in the multiple non-faulty dedicated processors, the method further includes: When model training is restarted, the general-purpose processor obtains the updated optimizer data; the general-purpose processor configures the updated first dataset for the first dedicated processor; and the general-purpose processor configures the updated first dataset for the third dedicated processor.

In another possible implementation, the method further includes: The first dedicated processor converts an optimizer parameter in the updated first dataset into a model parameter; and the first dedicated processor transmits the model parameter to a dedicated processor that is in the computing system and that is configured to train the model parameter.

Because only the optimizer data but no model parameter is saved in the final checkpoint, during the resumption of model training, the model parameter is computed based on optimizer data in a storage system, and then the model parameter is transmitted to the dedicated processor configured to train the model parameter, thereby ensuring that the optimizer data at the final checkpoint is consistent with the model parameter and overcoming a problem that the optimizer data is inconsistent with the model parameter due to an AllGather operation failure when a dedicated processor is faulty. In addition, according to the method provided in this application, a checkpoint during a fault can be saved, and model training can be resumed based on the checkpoint during the fault, thereby effectively reducing the training loss and improving model training efficiency.

In another possible implementation, the optimizer data includes an optimizer parameter and an optimizer state, and the optimizer state includes a variance and a momentum.

According to a second aspect, a data processing method is provided. The method is applied to a computing system including a general-purpose processor and multiple dedicated processors. The multiple dedicated processors are configured to train an artificial intelligence model. The multiple dedicated processors include at least two copies of optimizer data, the optimizer data includes a first dataset, and each of at least two dedicated processors includes the first dataset. For example, the multiple dedicated processors include a first dedicated processor and a second dedicated processor, and both the first dedicated processor and the second dedicated processor include the first dataset. The method is performed by the first dedicated processor. The method includes: training the artificial intelligence model to obtain a first gradient; updating the first dataset based on the first gradient, to obtain an updated first dataset; and transmitting the first gradient to the second dedicated processor.

In a possible implementation, the method further includes: obtaining an initial value of the first dataset configured by the general-purpose processor.

In another possible implementation, the method further includes: converting an optimizer parameter in the updated first dataset into a model parameter; and transmitting the model parameter to a dedicated processor that is in the computing system and that is configured to train the model parameter.

In another possible implementation, the method further includes: persisting the included dataset.

According to a third aspect, a data processing method is provided. The method is applied to a computing system including a general-purpose processor and multiple dedicated processors. The multiple dedicated processors are configured to train an artificial intelligence model. The multiple dedicated processors include at least two copies of optimizer data, the optimizer data includes a first dataset, and each of at least two dedicated processors includes the first dataset. For example, the multiple dedicated processors include a first dedicated processor and a second dedicated processor, and both the first dedicated processor and the second dedicated processor include the first dataset. The method is performed by the second dedicated processor. The method includes: obtaining a first gradient sent by the first dedicated processor; and updating the first dataset based on the first gradient, to obtain an updated first dataset.

In a possible implementation, the method further includes: obtaining an initial value of the first dataset sent by the first dedicated processor.

In another possible implementation, the method further includes: converting an optimizer parameter in the updated first dataset into a model parameter; and transmitting the model parameter to a dedicated processor that is in the computing system and that is configured to train the model parameter.

In another possible implementation, the method further includes: persisting the included dataset.

In another possible implementation, the method further includes: training the artificial intelligence model to obtain a second gradient.

According to a fourth aspect, a data processing method is provided. The method is applied to a computing system including a general-purpose processor and multiple dedicated processors. The multiple dedicated processors are configured to train an artificial intelligence model. The multiple dedicated processors include at least two copies of optimizer data, the optimizer data includes a first dataset, and each of at least two dedicated processors includes the first dataset. For example, the multiple dedicated processors include a first dedicated processor and a second dedicated processor, and both the first dedicated processor and the second dedicated processor include the first dataset. The method is performed by the general-purpose processor. The method includes: when the second dedicated processor is faulty, instructing to persist datasets included in multiple non-faulty dedicated processors, where the datasets contained in the multiple non-faulty dedicated processors constitute updated optimizer data, the multiple non-faulty dedicated processors include the first dedicated processor, and the updated optimizer data includes an updated first dataset.

In a possible implementation, that the general-purpose processor instructs to persist the datasets contained in the multiple non-faulty dedicated processors includes: obtaining integrity information sent by the non-faulty dedicated processors in the computing system, where the integrity information indicates integrity of the datasets included in the non-faulty dedicated processors; determining, based on the integrity information sent by the non-faulty dedicated processors in the computing system, that the datasets contained in the multiple non-faulty dedicated processors constitute the updated optimizer data; and sending a persistence command to the multiple non-faulty dedicated processors, where the persistence command instructs to persist the datasets included in the multiple non-faulty dedicated processors.

In another possible implementation, the integrity information includes identifiers and correctness information of data in the datasets; and determining, based on the integrity information sent by the non-faulty dedicated processors in the computing system, that the datasets contained in the multiple non-faulty dedicated processors constitute the updated optimizer data includes: determining multiple consecutive identifiers based on the identifiers included in the integrity information sent by the non-faulty dedicated processors in the computing system, where data indicated by the multiple consecutive identifiers constitutes the updated optimizer data; determining, based on the correctness information included in the integrity information, that the data indicated by the multiple consecutive identifiers is correct; and determining non-faulty dedicated processors in which the data indicated by the multiple consecutive identifiers is located as the multiple non-faulty dedicated processors whose datasets constitute the updated optimizer data.

In another possible implementation, the integrity information further includes iteration counts of data in the datasets included in the non-faulty dedicated processors; and the method further includes: determining, based on the iteration counts included in the integrity information, that iteration counts of the data indicated by the multiple consecutive identifiers are the same.

In another possible implementation, the method further includes: when model training is restarted, obtaining the updated optimizer data; configuring the updated first dataset for the first dedicated processor; and configuring the updated first dataset for a third dedicated processor.

According to a fifth aspect, a data processing apparatus is provided. The data processing apparatus includes modules of a dedicated processor configured to perform the method according to any one of the first aspect or the possible designs of the first aspect. For example, the data processing apparatus includes a communication module, a training module, and an optimizer data updating module.

The training module is configured to train an artificial intelligence model to obtain a first gradient. The optimizer data updating module is configured to update a first dataset based on the first gradient, to obtain an updated first dataset.

In a possible implementation, the communication module is configured to transmit the first gradient.

In another possible implementation, the communication module is further configured to obtain an initial value of the first dataset configured by a general-purpose processor.

In another possible implementation, the optimizer data updating module is further configured to convert an optimizer parameter in the updated first dataset into a model parameter. The communication module is further configured to transmit the model parameter to a dedicated processor that is in a computing system and that is configured to train the model parameter.

In another possible implementation, the optimizer data updating module is further configured to persist the included dataset.

According to a sixth aspect, a data processing apparatus is provided. The data processing apparatus includes modules of a dedicated processor configured to perform the method according to any one of the first aspect or the possible designs of the first aspect. For example, the data processing apparatus includes a communication module, a training module, and an optimizer data updating module.

The communication module is configured to obtain a first gradient; and the optimizer data updating module is configured to update a first dataset based on the first gradient, to obtain an updated first dataset.

In a possible implementation, the communication module is further configured to obtain an initial value of the first dataset.

In another possible implementation, the optimizer data updating module is further configured to convert an optimizer parameter in the updated first dataset into a model parameter. The communication module is further configured to transmit the model parameter to a dedicated processor that is in a computing system and that is configured to train the model parameter.

In another possible implementation, the optimizer data updating module is further configured to persist the included dataset.

According to a seventh aspect, a data processing apparatus is provided. The data processing apparatus includes modules of a general-purpose processor configured to perform the method according to any one of the first aspect or the possible designs of the first aspect. For example, the data processing apparatus includes a communication module, a fault handling module, and an optimizer data updating module.

When a dedicated processor in a system is faulty, the fault handling module is configured to instruct to persist datasets included in multiple non-faulty dedicated processors, where the datasets contained in the multiple non-faulty dedicated processors constitute updated optimizer data, the multiple non-faulty dedicated processors include a first dedicated processor, and the updated optimizer data includes an updated first dataset.

In a possible implementation, the communication module is configured to obtain integrity information sent by the non-faulty dedicated processors in the computing system, where the integrity information indicates integrity of the datasets included in the non-faulty dedicated processors;
when instructing to persist the datasets included in the multiple non-faulty dedicated processors, the fault handling module is specifically configured to determine, based on the integrity information sent by the non-faulty dedicated processors in the computing system, that the datasets contained in the multiple non-faulty dedicated processors constitute the updated optimizer data; and the communication module is further configured to send a persistence command to the multiple non-faulty dedicated processors, where the persistence command instructs to persist the datasets included in the multiple non-faulty dedicated processors.

In another possible implementation, the integrity information includes identifiers and correctness information of data in the datasets; and when determining, based on the integrity information sent by the non-faulty dedicated processors in the computing system, that the datasets contained in the multiple non-faulty dedicated processors constitute the updated optimizer data, the fault handling module is specifically configured to: determine multiple consecutive identifiers based on the identifiers included in the integrity information sent by the non-faulty dedicated processors in the computing system, where data indicated by the multiple consecutive identifiers constitutes the updated optimizer data; determine, based on the correctness information included in the integrity information, that the data indicated by the multiple consecutive identifiers is correct; and determine non-faulty dedicated processors in which the data indicated by the multiple consecutive identifiers is located as the multiple non-faulty dedicated processors whose datasets constitute the updated optimizer data.

In another possible implementation, the integrity information further includes iteration counts of data in the datasets included in the non-faulty dedicated processors; and the fault handling module is further configured to determine, based on the iteration counts included in the integrity information, that iteration counts of the data indicated by the multiple consecutive identifiers are the same.

In another possible implementation, the communication module is further configured to obtain the updated optimizer data when model training is restarted; the optimizer data updating module is configured to configure the updated first dataset for the first dedicated processor; and the communication module is further configured to configure the updated first dataset for a third dedicated processor.

According to an eighth aspect, a computing system is provided. The computing system includes a general-purpose processor and multiple dedicated processors, where a memory is configured to store a set of computer instructions, and when the processors execute the set of computer instructions, the general-purpose processor and the multiple dedicated processors jointly perform operation steps of the method according to any one of the first aspect or the possible implementations of the first aspect.

According to a ninth aspect, a computer device is provided. The computer device includes a memory and multiple processors, where the memory is configured to store a set of computer instructions, and when the processors execute the set of computer instructions, the multiple processors jointly perform operation steps of the method according to any one of the first aspect or the possible implementations of the first aspect.

According to a tenth aspect, a computer-readable storage medium is provided, including computer software instructions. When the computer software instructions are run in a processor, the processor is enabled to perform operation steps of the method according to any one of the first aspect or the possible implementations of the first aspect.

According to an eleventh aspect, a computer program product is provided. When the computer program product runs on a computer, the computer is enabled to perform operation steps of the method according to any one of the first aspect or the possible implementations of the first aspect.

For technical effects brought by any design in the second aspect to the eleventh aspect, refer to technical effects brought by the first aspect or different designs in the first aspect. Details are not described herein again.

Based on the implementations provided in the foregoing aspects, further combinations may be made to provide more implementations in this application.

### BRIEF DESCRIPTION OF DRAWINGS

FIG. 1 is a diagram of large model training according to this application;
FIG. 2A and FIG. 2B are diagrams of checkpoints according to this application;
FIG. 3 is a diagram of a logical process of model training according to this application;
FIG. 4 is a diagram of an architecture of a data processing system according to this application;
FIG. 5A to FIG. 5C are a schematic flowchart of a data processing method according to this application;
FIG. 6A to FIG. 6C are a schematic flowchart of a data processing method according to this application;
FIG. 7 is a diagram of gradient transmission according to this application;
FIG. 8 is a diagram of saving of a final checkpoint according to this application;
FIG. 9A and FIG. 9B are a schematic flowchart of a data processing method according to this application;
FIG. 10A and FIG. 10B are diagrams of saving of optimizer data according to this application;
FIG. 11 is a diagram of a structure of a data processing apparatus according to this application;
FIG. 12 is a diagram of a structure of a data processing apparatus according to this application;
FIG. 13A and FIG. 13B are diagrams of structures of data processing apparatuses according to this application; and
FIG. 14 is a diagram of a structure of a computer device according to this application.

### DESCRIPTION OF EMBODIMENTS

For ease of understanding, main terms in this application are first described.

**Large model**: refers to an ultra-large-scale artificial intelligence (Artificial Intelligence, AI) model. The large model is widely used in the natural language processing field and is fundamentally changing the state of a natural language processing (Natural Language Processing, NLP) task, giving rise to more powerful and intelligent language technologies. The large model is one of important directions of AI development. The large model also demonstrates an excellent capability in various natural language processing tasks, such as text classification, sentiment analysis, abstract generation, and translation. The large model may be used in multiple application fields such as automatic writing, chatbots, virtual assistants, voice assistants, and automatic translation. A large language model (Large Language Model, LLM), bidirectional encoder representations from transformers (Bidirectional Encoder Representations from Transformers, BERT), a generative pre-trained transformer (Generative Pre-Trained Transformer, GPT), GPT-3, GPT-4, MoE, and the like are examples of large models. The large model has the following features:

1. Large scale: A model size may reach hundreds of gigabytes (Gigabyte, GB) or even larger. The large model includes tens of billions, hundreds of billions, or even trillions of model parameters. This large-scale model provides powerful representational and learning capabilities.

2. Multi-task learning: The large model can process various natural language processing (Natural Language Processing, NLP) tasks, such as machine translation, text summarization, and question-answering, so that the model can learn broader and more generalized language understanding capabilities.

3. Powerful computing resources: Training the large model usually requires hundreds or even thousands of dedicated processors and a large amount of time. For example, training the large model needs to take several weeks to several months. Powerful computing resources can accelerate a training process while preserving capabilities of the large model. The dedicated processors include but are not limited to a graphics processing unit (graphics processing unit, GPU), a data processing unit (data processing unit, DPU), a neural processing unit (neural processing unit, NPU), and an embedded neural-network processing unit (neural-network processing unit, NPU).

4. Rich data: A large amount of training data is used to train the large model. This fully exploits an advantage of the parameter scale of the large model.

**Model parameter**: refers to a variable or a weight that needs to be learned or adjusted in the artificial intelligence model. Model parameters may affect a prediction capability and performance of the model. In a model training process, the model tries different parameter combinations to optimize the model performance. Common model parameters include a weight, a bias, a learning rate, a regularization coefficient, and the like. When the model is used for prediction, these model parameters are used to compute an output result.

**Model training**: refers to training the artificial intelligence model by using a training set, so that the artificial intelligence model can predict or classify unknown data. In the model training process, learning is performed based on a feature and a target value in the training set, and a model is generated after training is completed. The model may be used to predict or classify unknown data. Model training is one of most important stages in machine learning and directly affects accuracy and reliability of the model.

**Optimizer**: may be an algorithm used to adjust model parameters of the artificial intelligence model, so that the artificial intelligence model can more accurately predict the output result. An objective of the optimizer is to minimize a loss function, that is, a difference between a predicted value and an actual value of the model. Common optimizers include stochastic gradient descent (stochastic gradient descent, SGD), adaptive moment estimation (adaptive moment estimation, Adam), adaptive gradient (adaptive gradient, Adagrad), root mean square propagation (root mean square prop, RMSprop), and the like. These optimizers use different policies to update model parameters, so that the artificial intelligence model achieves better performance and accuracy. Generally, an input of an optimizer is a gradient (gradient), and an output thereof is a model parameter.

**Checkpoint (checkpoint, CKPT)**: means that checkpoint data is saved at intervals or in training epochs in the model training process, to facilitate subsequent model recovery and resumption of model training. The checkpoint includes model parameters and optimizer data. The optimizer data includes an optimizer parameter (parameter) and an optimizer state (optimizer state, OS). The optimizer state includes a variance (variance) and a momentum (momentum). For example, if model training is interrupted due to an exception in the model training process, model training may be resumed based on a latest checkpoint, and model training does not need to be restarted. The checkpoint may also be used for model evaluation and debugging. For example, model performance at different training stages is observed based on different checkpoints to determine a training effect and an optimization direction of the model accordingly. In deep learning, the checkpoint is an important way to save and manage model parameters.

**Resumable training**: is a deep learning training technique that allows model training to be suspended and current data to be saved in the model training process. Generally, the current data includes model parameters and optimizer data. When training is restarted, model training can be resumed from where the training was previously suspended, without starting from scratch. This technique can accelerate the model training process, reduce waste of computing resources, and handle various problems that occur in the model training process, such as computer faults or network interruptions.

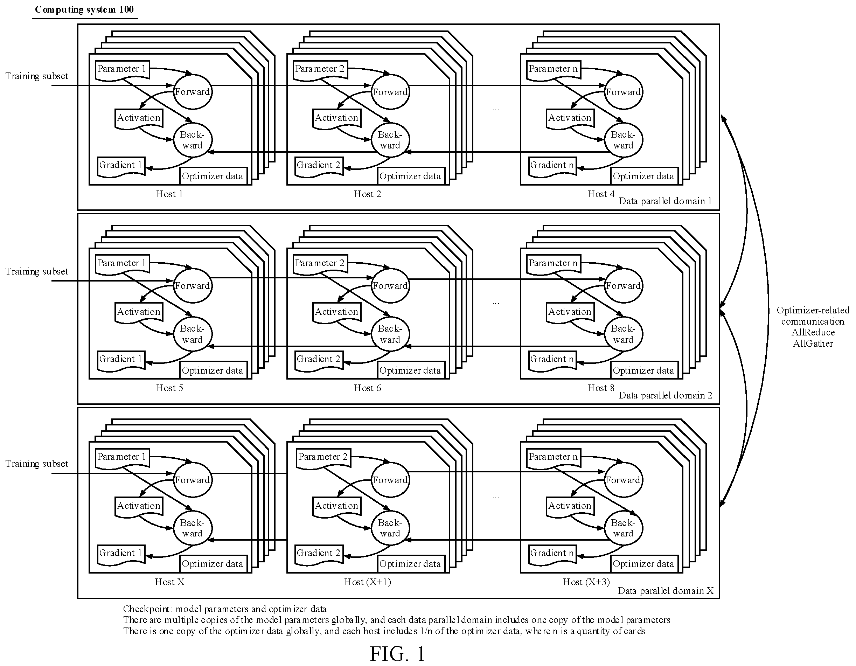

FIG. 1 is a diagram of large model training according to this application. As shown in FIG. 1, a computing system 100 includes multiple cards. The cards may also be referred to as training cards, accelerator cards, or dedicated processors. The multiple cards may be located on multiple servers. The servers may be referred to as hosts. A parallelism technique is used to accelerate training of a large model based on the multiple cards. Parallelism techniques include data parallel (Data Parallel), model parallel (Model Parallel), pipeline parallel (Pipeline Parallel), and optimizer parallel (Optimizer Parallel).

Data parallelism means that the multiple cards are grouped into multiple data parallel domains. As shown in FIG. 1, the multiple cards are grouped into X data parallel domains. A training set is partitioned based on the data parallel domains, and cards included in each data parallel domain train the large model based on a training subset. Training subsets used by the multiple data parallel domains for parallel training of the large model may be different.

Model parallelism means that the large model is partitioned into multiple submodels. For example, the large model is partitioned into multiple layers, and each card may train at least one layer of the model. For another example, if a scale of a single layer of the model is relatively large, the layer may be divided, so that the multiple cards can train one layer of the model. Different data parallel domains may train different layers of the large model. The multiple data parallel domains may train the large model in parallel.

Pipeline parallelism means that the large model is partitioned into multiple layers based on a logical sequence of the multiple layers in the large model, where the multiple cards train the layers of the large model in parallel or train the layers of the large model serially based on the logical sequence of the multiple layers in the large model. The logical sequence of the layers of the large model may refer to a dependency relationship between the layers. For example, if output data of the first layer is input data of the second layer, two cards may train the first layer and the second layer serially.

Optimizer parallelism means that optimizer data is partitioned into multiple datasets based on a quantity of cards in the computing system, where each card includes a portion of the optimizer data, thereby reducing storage requirements of the optimizer data on the cards. Each card stores a different dataset, and only one copy of the dataset exists globally. Datasets stored in the multiple cards can constitute the complete optimizer data.

For example, during training of an LLM, data stored in a card mainly includes activation (activation), a model parameter, and optimizer data. The activation and the model parameter are represented in half-precision floating-point (Half-precision floating-point, FP16), and the optimizer data is represented in single-precision floating-point (for example, FP32). It is assumed that a quantity of model parameters is M, and storage space required by the model parameters is 2M bytes, and storage space required by the optimizer data is 12M bytes. In other words, the optimizer data includes M optimizer parameters, M variances, and M momentums. Storage space required by the M optimizer parameters is 4M bytes. Storage space required by the M variances is 4M bytes. Storage space required by the M momentums is 4M bytes. For example, if GPT-3 includes 175 billion model parameters, the storage space required by the optimizer data is 12 bytes x 175 billion = 2.45 terabytes (Terabyte, TB). In this case, in distributed training of the LLM by using multiple machines and multiple cards, each card stores a portion of the optimizer data, and the multiple cards store the complete optimizer data.

Each card performs operations such as forward propagation, activation, backward propagation, gradient generation, and gradient accumulation, and gradients are distributed across the multiple cards through an AllReduce operation, such that each card updates, based on the gradient, optimizer data having an identifier identical to that of the gradient. Then model parameters converted from optimizer parameters are obtained through an AllGather operation. In this way, model training is implemented.

In addition, multiple copies of model parameters are included globally. Each data parallel domain includes one complete copy of model parameters, and model parameters included in cards in different data parallel domains are the same. For example, a data parallel domain 1 includes M model parameters, and a data parallel domain 2 includes M model parameters. The M model parameters are distributed and stored across cards in the data parallel domain. For example, a card 1, a card 5, and a card x include a parameter 1; and a card 2, a card 6, and a card x+1 include a parameter 2.

Globally, there is a single copy of optimizer data. It is assumed that the system includes n cards, each card including 1/n of the optimizer data. The n portions of optimizer data, each of a size 1/n, together constitute a complete set of optimizer data.

In some embodiments, a card may periodically save a checkpoint, that is, save the checkpoint at fixed intervals. The checkpoint may be referred to as a periodic checkpoint. After the model training fails at any time point, the model training is resumed based on a previous checkpoint.

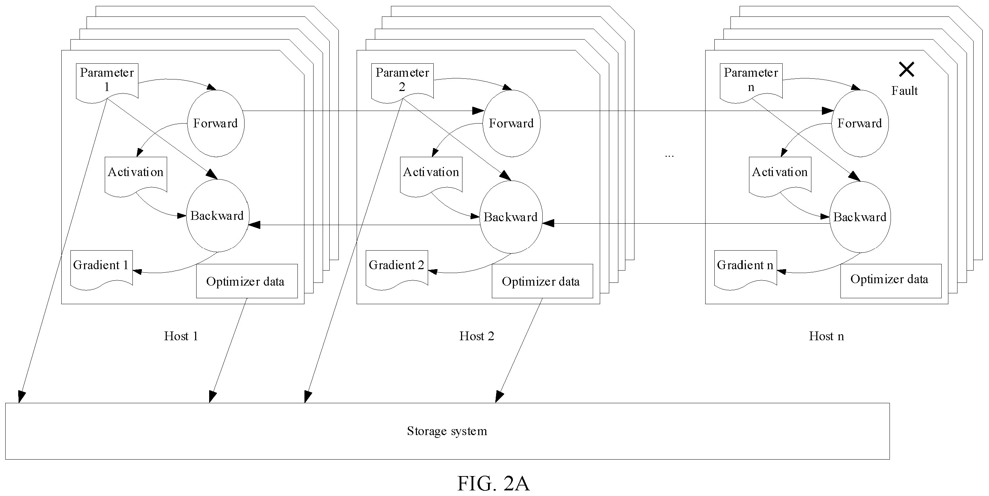

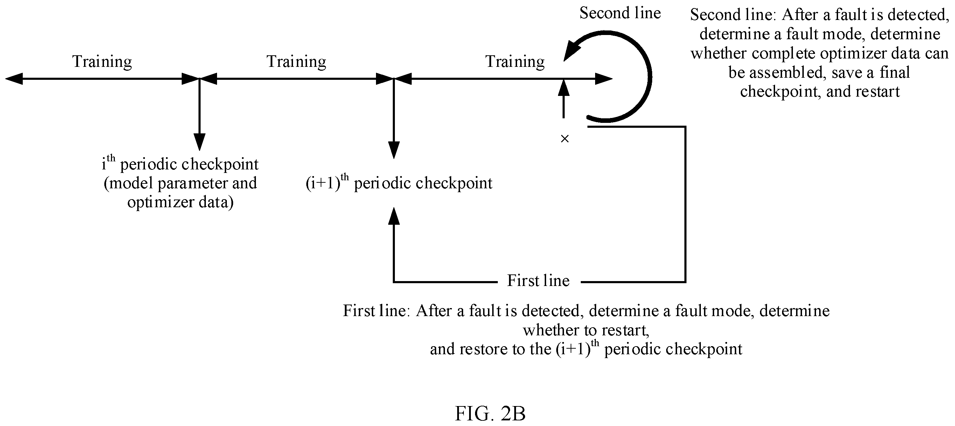

For example, as shown in FIG. 2A, a card n is faulty, and a card 1 and a card 2 persist a model parameter and optimizer data to a storage system. As shown in FIG. 2B, in a model training process, an i^{th} checkpoint and an (i+1)^{th} checkpoint are saved. After the (i+1)^{th} checkpoint, the card n is faulty and the model training is interrupted. The fault is detected, a fault mode is determined, and whether to restart training is determined. If the model training is restarted, the model training is resumed based on the (i+1)^{th} checkpoint.

Because the model training is resumed by using a previous checkpoint, some training losses are caused. For example, optimizer data and updated data of model parameters during model training from the (i+1)^{th} checkpoint to a fault occurrence time point are lost.

The training loss is measured mainly based on the following two factors: 1. A quantity of cards used for a training task. To be specific, a large model is trained by using thousands of cards, and even if a loss lasts only a few minutes, the quantity of cards multiplied by duration of the loss leads to severe training loss. 2. A card or network fault rate. To be specific, when the card or network fault rate is relatively high, a training interruption frequency increases, and the training loss also increases consequently.

The training loss may be used to calculate efficiency of multiple cards. A severer training loss indicates lower card efficiency.

There are mainly two ways to reduce the training loss: 1. Reduce a fault probability. 2. When a fault occurs, try to rectify the fault based on a last state. For example, an attempt is made to save a checkpoint at the time of the fault, and model training is resumed based on the checkpoint at the time of the fault to reduce the training loss. The checkpoint at the time of the fault may be referred to as a final checkpoint.

A technology for implementing the final checkpoint also has two problems.
1. Checkpoint integrity: As can be learned from FIG. 1, only a single copy of optimizer data is maintained globally, and each card includes 1/n of the optimizer data. If one card is faulty, the checkpoint is incomplete, and the optimizer data is incomplete consequently.
2. Checkpoint data consistency: Because the optimizer data is incomplete, model parameters cannot be updated based on the optimizer data, resulting in inconsistency between the optimizer data and the model parameters, and leading to slower convergence of model training, or even worse performance than resuming model training based on a previous periodic checkpoint.

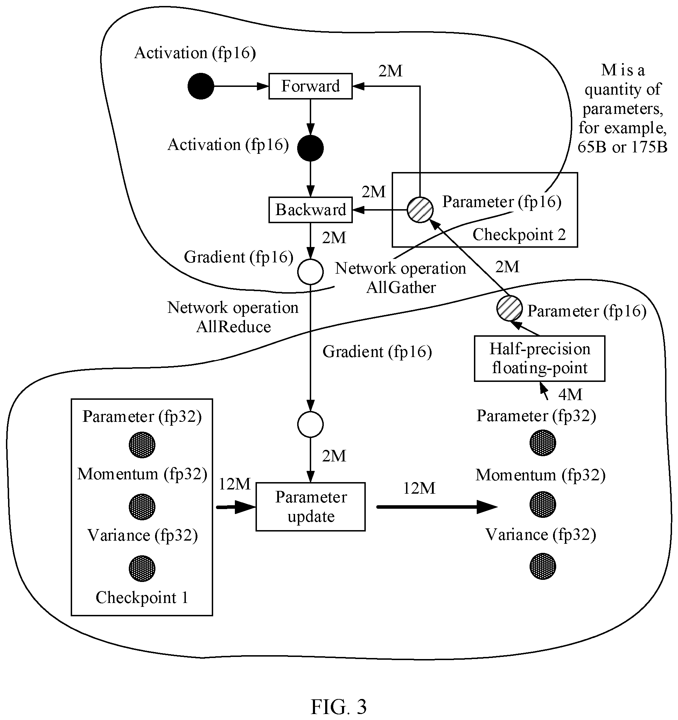

A case of inconsistency between the optimizer data and the model parameters mainly includes: The optimizer data is latest optimizer data, while the model parameters are model parameters in a previous iteration; or model parameters on some cards are latest model parameters, while model parameters on other cards are model parameters in a previous iteration. This case occurs mainly because an AllGather operation fails. For example, FIG. 3 is a diagram of a logical process of model training according to this application. A gradient is obtained through an AllReduce operation, optimizer data is updated based on the gradient, and optimizer data of a checkpoint 1 is saved. An optimizer parameter is converted into a model parameter. For example, an optimizer parameter fp32 is converted into a model parameter fp16. However, due to a card fault, an AllGather operation fails, and a model parameter of a checkpoint 2 cannot be updated. As a result, the optimizer data is inconsistent with the model parameter. An amount of the optimizer data is 12M. Assuming M = 175B, a size of the optimizer data is 2.4 TB, and a size of model parameters is 400 GB.

To resolve a problem that a fault of a dedicated processor leads to an inaccurate final checkpoint and incomplete optimizer data, this application provides a data processing method. The method is applied to a computing system including a general-purpose processor and multiple dedicated processors. The multiple dedicated processors are configured to train an artificial intelligence model. The multiple dedicated processors include at least two copies of optimizer data, the optimizer data includes a first dataset, and each of at least two dedicated processors includes the first dataset. For example, the multiple dedicated processors include a first dedicated processor and a second dedicated processor, and both the first dedicated processor and the second dedicated processor include the first dataset. The method includes: The first dedicated processor trains the artificial intelligence model to obtain a first gradient; the first dedicated processor updates the first dataset based on the first gradient, to obtain an updated first dataset; the second dedicated processor updates the first dataset based on the first gradient, to obtain the updated first dataset; and when the second dedicated processor is faulty, the general-purpose processor instructs to persist datasets included in multiple non-faulty dedicated processors, where the datasets contained in the multiple non-faulty dedicated processors constitute updated optimizer data, the multiple non-faulty dedicated processors include the first dedicated processor, and the updated optimizer data includes the updated first dataset.

Compared with a case in which only a single copy of optimizer data is maintained globally, and a fault of a dedicated processor leads to an inaccurate final checkpoint and incomplete optimizer data, in the method provided in this application, the at least two dedicated processors include datasets in the optimizer data globally, that is, at least two copies of the optimizer data are deployed globally, thereby achieving multiple replicas of the optimizer data globally. In addition, the datasets in the optimizer data included in the dedicated processors are updated through gradient transmission between the dedicated processors, that is, the multiple replicas of the optimizer data are updated by "computation instead of transmission", thereby ensuring integrity of the optimizer data at any time. When a dedicated processor is faulty, since the system includes multiple replicas of the optimizer data, the datasets included in the non-faulty dedicated processors may constitute the complete optimizer data, thereby improving reliability of the optimizer data and ensuring accuracy of a final checkpoint, so as to facilitate resumption of model training based on the final checkpoint and reduce training loss.

The following describes in detail implementations of a data processing method according to this application with reference to the accompanying drawings.

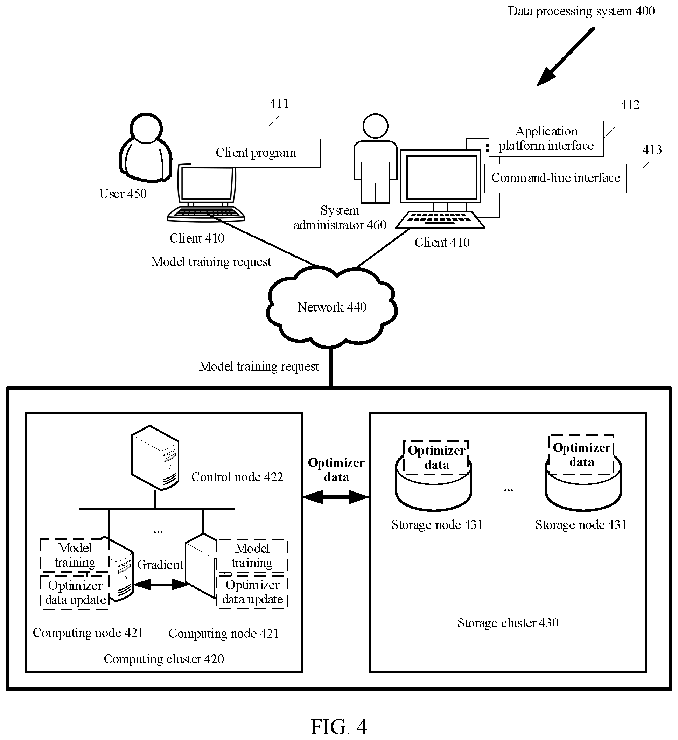

FIG. 4 is a diagram of an architecture of a data processing system according to this application. As shown in FIG. 4, the data processing system 400 includes a client 410, a computing cluster 420, and a storage cluster 430.

The storage cluster 430 includes multiple storage nodes 431. One storage node 431 includes one or more controllers, a network interface card, and multiple hard disks. The hard disk is configured to store data. The hard disk may be a magnetic disk or another type of storage medium, for example, a solid-state drive or a shingled magnetic recording hard disk. The network interface card is configured to communicate with a computing node 421 included in the computing cluster 420. The controller is configured to write data into the hard disk or read data from the hard disk based on a data read/write request sent by the computing node 421. In a data read/write process, the controller needs to translate an address carried in the data read/write request into an address that can be identified by the hard disk.

The computing cluster 420 includes multiple computing nodes 421. The computing node 421 may be a computing device, for example, an accelerator card or a server.

In some embodiments, the computing cluster 420 may be a heterogeneous computing architecture to provide high-performance computing. For example, the computing node 421 may include computing units having computing capabilities, such as a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU), to provide high-performance computing.

In some other embodiments, the multiple computing nodes 421 are interconnected by a network device (such as a switch or a network interface card) based on high-speed interconnect technologies, so that the multiple computing nodes 421 communicate with each other.

The client 410 communicates with the computing cluster 420 and the storage cluster 430 via a network 440. For example, the client 410 sends a request to the computing cluster 420 via the network 440, requesting the computing cluster 420 to perform model training. The network 440 may be an enterprise intranet (for example, a local area network (Local Area Network, LAN)) or the Internet (Internet). The client 410 is a computer connected to the network 440, and may also be referred to as a workstation (workstation). Different clients may share network resources (such as a computing resource and a storage resource).

In some embodiments, the computing cluster 420 further includes a control node 422. For example, the control node and the computing node may be independent physical devices. For another example, the control node and the multiple computing nodes may be located in a same physical device. The control node may be a CPU. The multiple computing nodes include computing units such as a GPU, an NPU, and a DPU. The control node 422 is configured to manage and allocate tasks, and the multiple computing nodes execute multiple tasks in parallel, to improve a data processing rate.

In this application, the control node 422 is configured to instruct, according to a request, the multiple computing nodes to perform model training based on the parallelism technique described in the foregoing embodiment.

The control node 422 is further configured to group the multiple computing nodes in the system into multiple groups, where each group includes at least two computing nodes, and each group includes a copy of complete optimizer data, thereby achieving multiple replicas of the optimizer data globally.

The control node 422 is further configured to instruct a non-faulty computing node to persist the optimizer data when a computing node is faulty.

Gradients may be transmitted between computing nodes 421 in different groups, so that the computing nodes 421 update datasets in the optimizer data based on the gradients.

In this embodiment of this application, the storage cluster 430 stores the optimizer data and the like.

In some other embodiments, a client program 411 is installed on the client 410, the client 410 runs the client program 411 to display a user interface (user interface, UI), and a user 450 performs an operation on the user interface to submit a request. For example, the user 450 performs an operation on the user interface to submit a request. After obtaining the request, the control node 422 loads the optimizer data from the storage cluster 430, and allocates the optimizer data to the multiple computing nodes, so that the multiple computing nodes perform model training based on the parallelism technique described in the foregoing embodiment.

Optionally, a system administrator 460 may invoke an application platform interface (application platform interface, API) 412 or a command-line interface (command-line interface, CLI) 413 by using the client 410, to configure system information and the like, for example, an initial value of the optimizer data provided in this application and configured for the computing node.

FIG. 4 is merely a diagram. A device connection manner and a quantity of devices in the data processing system are not limited in this embodiment of this application. For example, the data processing system may include multiple clients. One client may be connected to multiple computing nodes. Different clients establish connections to different computing nodes.

The following describes a data processing process in detail with reference to the accompanying drawings.

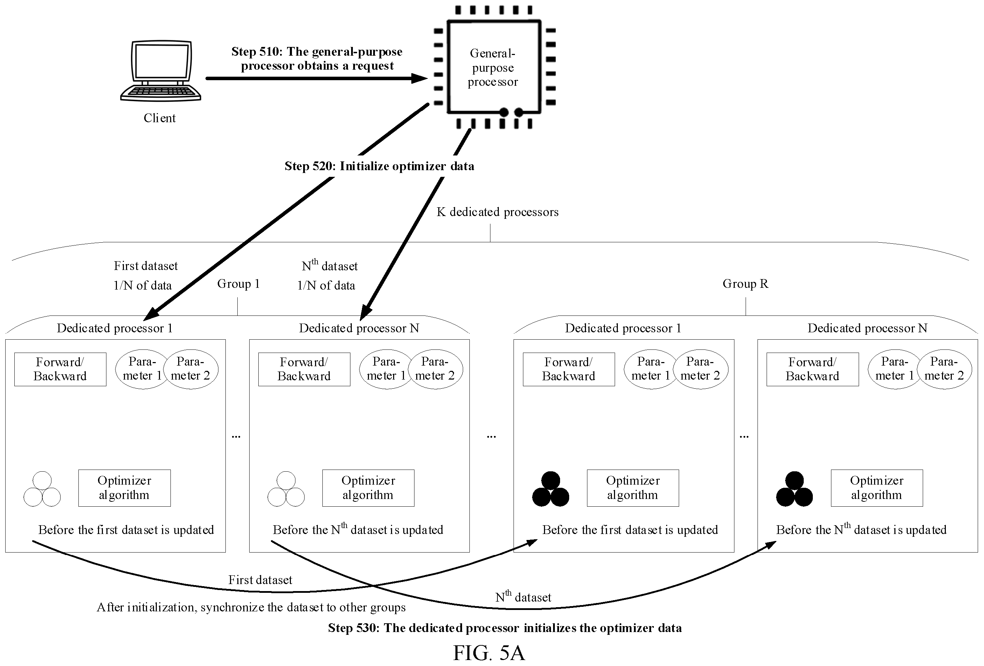

FIG. 5A to FIG. 5C are a schematic flowchart of a data processing method according to this application. An optimizer data update and a final checkpoint are mainly described herein. It is assumed that a computing system includes a general-purpose processor and K dedicated processors.

FIG. 5A shows an initialization process before a dedicated processor performs model training. The method includes the following step 510 to step 530.

### Step 510: The general-purpose processor obtains a request.

The general-purpose processor obtains a request sent by a client, where the request instructs to perform model training. The request may include a model identifier, so that the general-purpose processor identifies a model based on the model identifier, and instructs a dedicated processor to load, from a storage system, the model indicated by the model identifier.

The general-purpose processor may obtain optimizer data from the storage system. It should be noted that when the general-purpose processor instructs the dedicated processor for the first time to train the model, the general-purpose processor may obtain initial optimizer data from the storage system, where the initial optimizer data includes an initial value of an optimizer parameter, an initial value of a momentum, and an initial value of a variance. When the general-purpose processor instructs the dedicated processor to resume model training, that is, when the dedicated processor performs resumable training, the general-purpose processor may obtain updated optimizer data from the storage system, where the updated optimizer data includes an updated value of the optimizer parameter, an updated value of the momentum, and an updated value of the variance.

### Step 520: The general-purpose processor initializes the optimizer data.

The general-purpose processor may group the dedicated processors in the system to obtain multiple groups. Each group includes at least two dedicated processors. A quantity of dedicated processors included in each group may be the same or may be different.

The general-purpose processor partitions the optimizer data based on a quantity of dedicated processors in a group, and each dedicated processor in the group includes a portion of the optimizer data. At least two dedicated processors belonging to different groups include the same optimizer data. Each group includes a complete copy of the optimizer data, and the multiple groups include multiple complete copies of the optimizer data, thereby achieving multiple replicas of the optimizer data globally.

For example, the general-purpose processor groups the K dedicated processors in the system into R groups. Each group includes at least two dedicated processors. A value of R is an integer greater than or equal to 2. If the group quantity R is larger, there are more copies of the optimizer data in the system, and it is easier to obtain the complete optimizer data, thereby improving reliability of the optimizer data.

For ease of description, the following uses an example in which each group includes N dedicated processors for description.

The general-purpose processor selects one group from the R groups, and partitions the optimizer data into N portions based on the quantity N of dedicated processors in the group. The N dedicated processors in the group include the N portions of the data, that is, one dedicated processor in the group includes 1/N of the optimizer data. The N portions of the data included in the N dedicated processors constitute the complete optimizer data. A value of N is an integer greater than or equal to 2.

In some embodiments, the optimizer data includes M optimizer parameters, M variances, and M momentums. The general-purpose processor may partition the M optimizer parameters, the M variances, and the M momentums into N portions. Alternatively, the general-purpose processor may partition the M optimizer parameters, the M variances, and the M momentums into N datasets. One dedicated processor in a group includes one dataset. Each dataset includes an optimizer parameter, a variance, and a momentum. Different dedicated processors in the group include different datasets. The N datasets included in the N dedicated processors constitute the complete optimizer data. The general-purpose processor configures a first dataset for a dedicated processor 1 in a group 1, configures a second dataset for a dedicated processor 2 in the group 1, and so on, and configures an N^{th} dataset for a dedicated processor N in the group 1.

A quantity of optimizer parameters, a quantity of variances, and a quantity of momentums included in the dataset are the same. A dataset includes one or more groups of optimizer parameters, variances, and momentums. For example, the dataset includes one optimizer parameter, one variance, and one momentum. For another example, the dataset includes multiple optimizer parameters, multiple variances, and multiple momentums.

Different datasets may include a same quantity of optimizer parameters. For example, each dataset includes M/N optimizer parameters, M/N variances, and M/N momentums.

Alternatively, different datasets may include different quantities of optimizer parameters. For example, the first dataset includes 100 optimizer parameters, 100 variances, and 100 momentums. The second dataset includes 150 optimizer parameters, 150 variances, and 150 momentums.

If different datasets include a same quantity of optimizer parameters, the different datasets also include the same quantity of momentums and the same quantity of variances. If different datasets include different quantities of optimizer parameters, the different datasets also include different quantities of momentums and different quantities of variances.

For example, the group includes two dedicated processors, and the optimizer data is partitioned into two datasets. The two dedicated processors in the group include two datasets. In other words, the first dedicated processor in the group includes the first dataset in the optimizer data, and the second dedicated processor in the group includes the second dataset in the optimizer data. The two datasets included in the two dedicated processors constitute complete initial optimizer data. The optimizer data includes 175 billion optimizer parameters, 175 billion variances, and 175 billion momentums. Each dedicated processor in the group includes 87.5 billion optimizer parameters, 87.5 billion variances, and 87.5 billion momentums. The first dedicated processor includes optimizer parameters, variances, and momentums with identifiers ranging from 1 to 87.5 billion. The first dedicated processor includes optimizer parameters, variances, and momentums with identifiers ranging from 87.6 billion to 175 billion.

### Step 530: The dedicated processor initializes the optimizer data.

The dedicated processor in the group transmits configured optimizer data to a dedicated processor in another group, so that the dedicated processor in the another group includes the optimizer data. In this way, each group includes a complete copy of the optimizer data, and multiple complete copies of the optimizer data are included in the multiple groups, thereby achieving multiple replicas of the optimizer data globally.

For example, the dedicated processor 1 in the group 1 transmits the first dataset to a dedicated processor 1 in a group R, the dedicated processor 2 in the group 1 transmits the second dataset to a dedicated processor 2 in the group R, and so on, and the dedicated processor N in the group 1 transmits the N^{th} dataset to a dedicated processor N in the group R.

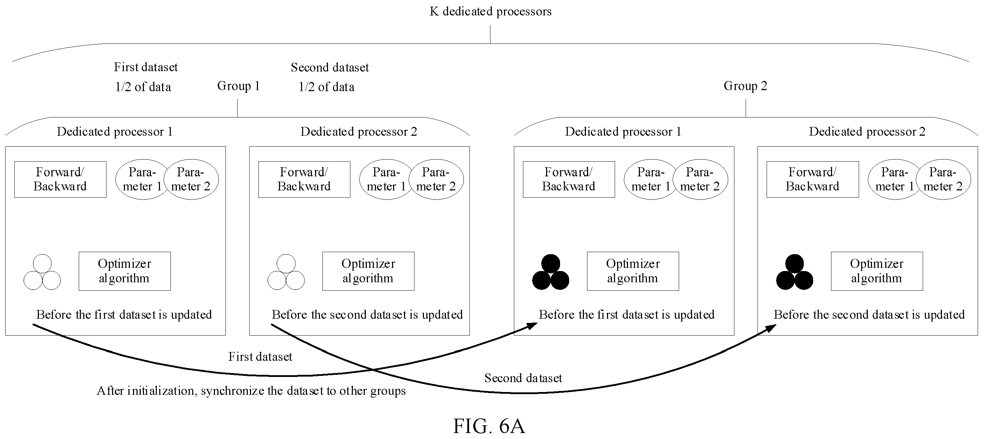

For example, it is assumed that R is equal to 2, and N is equal to 2. As shown in FIG. 6A, the dedicated processors in the system are grouped into two groups, and each group includes two dedicated processors. The optimizer data includes the first dataset and the second dataset. The dedicated processor 1 in the group 1 includes the first dataset, and the dedicated processor 2 in the group 1 includes the second dataset. The dedicated processor 1 in the group 1 transmits the first dataset to a dedicated processor 1 in the group 2. The dedicated processor 2 in the group 1 transmits the second dataset to a dedicated processor 2 in the group 2.

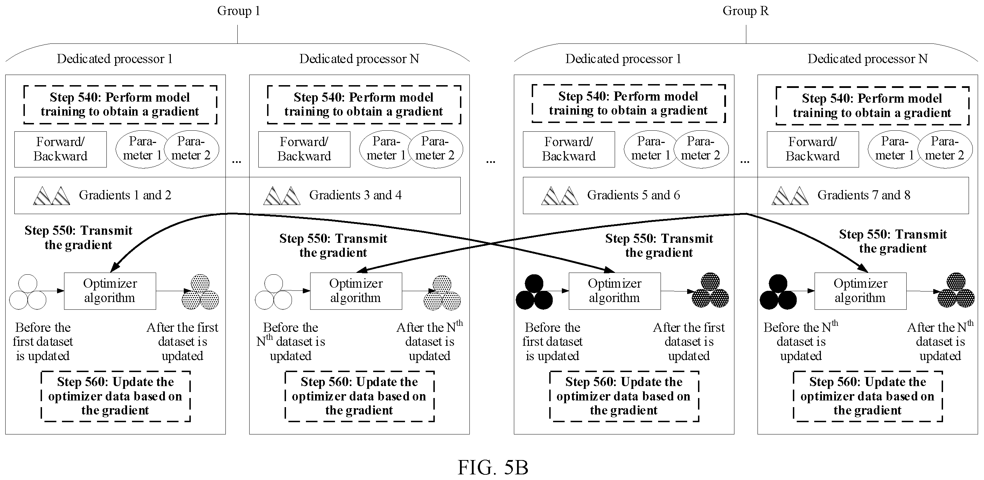

After the initialization process is complete, the dedicated processors train the model. FIG. 5B shows a process of updating the optimizer data. The method includes the following step 540 to step 560.

### Step 540: The dedicated processor trains the model to obtain a gradient.

The dedicated processor in each group trains the model based on training data, to obtain a gradient. For example, the dedicated processor performs operations such as forward, activation, backward, gradient generation, and gradient accumulation.

In some embodiments, the optimizer data includes M optimizer parameters, M variances, and M momentums. Dedicated processors in each data parallel domain train the model based on the training data, to obtain M gradients.

### Step 550: The dedicated processor transmits the gradient to a dedicated processor including a same dataset.

The dedicated processor transmits the gradient to a dedicated processor in which optimizer data having an identifier identical to that of the gradient.

For example, both the dedicated processor 1 in the group 1 and the dedicated processor 1 in the group 2 include the first dataset, and the first dataset includes optimizer data with identifiers ranging from 1 to M/2. Both the dedicated processor 2 in the group 1 and the dedicated processor 2 in the group 2 include the second dataset, and the second dataset includes optimizer data with identifiers ranging from (M/2)+1 to M.

The dedicated processor 1 in the group 1 transmits gradients with identifiers ranging from 1 to M/2 to the dedicated processor 1 in the group 2, and the dedicated processor 2 in the group 1 transmits gradients with identifiers ranging from (M/2)+1 to M to the dedicated processor 2 in the group 2.

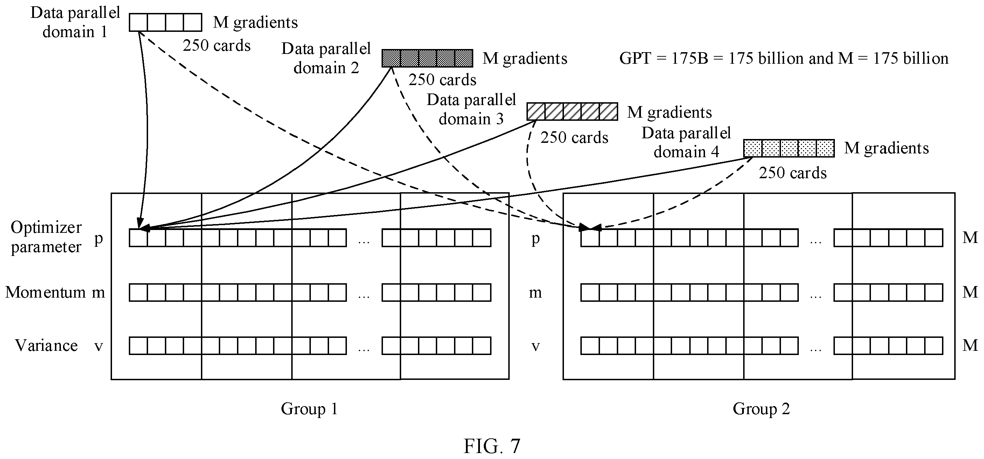

For example, as shown in FIG. 7, all cards in the computing system are grouped into four data parallel domains, and each data parallel domain includes 250 cards. The optimizer data includes M optimizer parameters, M variances, and M momentums. All the cards in the computing system are grouped into two groups, and the optimizer data is partitioned into 250 datasets. One card in each group includes one dataset. Each dataset includes M/250 optimizer parameters, M/250 variances, and M/250 momentums. Gradients generated by the cards in the four data parallel domains are transmitted to cards including optimizer data whose identifiers are the same as identifiers of the gradients, in groups 1 and 2.

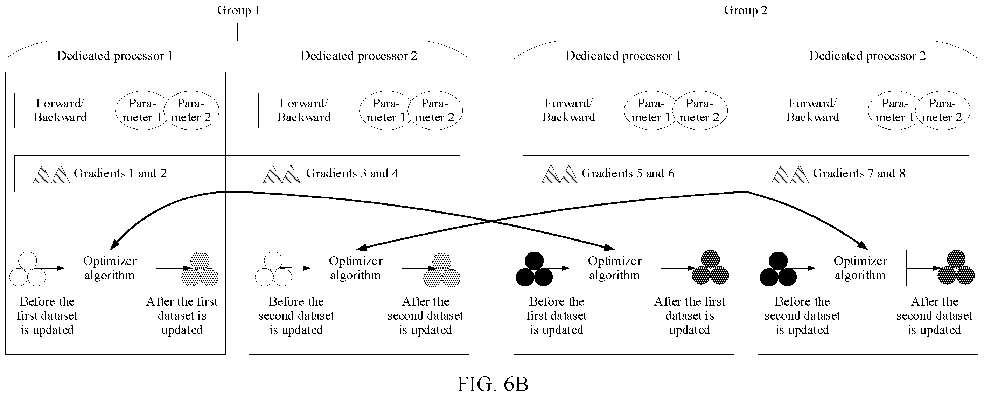

For example, as shown in FIG. 6B, the dedicated processor 1 in the group 1 generates a gradient 1 and a gradient 2, and the dedicated processor 2 in the group 1 generates a gradient 3 and a gradient 4. The dedicated processor 1 in the group 1 transmits the gradient 1 and the gradient 2 to the dedicated processor 1 in the group 2. The dedicated processor 2 in the group 1 transmits the gradient 3 and the gradient 4 to the dedicated processor 1 in the group 1 and the dedicated processor 1 in the group 2.

The dedicated processor 1 in the group 2 generates a gradient 5 and a gradient 6, and the dedicated processor 2 in the group 2 generates a gradient 7 and a gradient 8. The dedicated processor 1 in the group 2 transmits the gradient 5 and the gradient 6 to the dedicated processor 2 in the group 1 and the dedicated processor 2 in the group 2. The dedicated processor 2 in the group 2 transmits the gradient 7 and the gradient 8 to the dedicated processor 2 in the group 1.

In some embodiments, if the first dataset includes optimizer parameters, variances, and momentums that correspond to multiple identifiers, gradients corresponding to the multiple identifiers are transmitted to a dedicated processor including a dataset with the same identifiers. For example, the first dataset includes optimizer parameters, variances, and momentums that correspond to an identifier 1 to an identifier 3, and both the dedicated processor 1 in the group 1 and the dedicated processor 1 in the group 2 include the first dataset. In this case, the dedicated processor 1 in the group 1 transmits gradients corresponding to the identifier 1 to the identifier 3 to the dedicated processor 1 in the group 2.

### Step 560: The dedicated processor updates the optimizer data based on the gradient.

Each dedicated processor updates, based on the gradient, the dataset in the optimizer data included in the dedicated processor, to obtain an updated dataset.

The dedicated processor 1 in the group 1 and the dedicated processor 1 in the group R update the first dataset based on the gradient. By analogy, the dedicated processor N in the group 1 and the dedicated processor N in the group R update the N^{th} dataset based on the gradient.

For example, both the dedicated processor 1 in the group 1 and the dedicated processor 1 in the group 2 update an optimizer parameter, a variance, and a momentum (parameter, momentum, and variance, PMV) with an identifier 1 based on a gradient with an identifier 1. By analogy, both the dedicated processor 1 in the group 1 and the dedicated processor 1 in the group 2 update an optimizer parameter, a variance, and a momentum with an identifier M/2 based on a gradient with an identifier M/2, to obtain an updated optimizer parameter, an updated variance, and an updated momentum.

Both the dedicated processor 2 in the group 1 and the dedicated processor 2 in the group 2 update an optimizer parameter, a variance, and a momentum with an identifier (M/2)+1 based on a gradient with an identifier (M/2)+1. By analogy, both the dedicated processor 2 in the group 1 and the dedicated processor 2 in the group 2 update an optimizer parameter, a variance, and a momentum with an identifier M based on a gradient with an identifier M, to obtain an updated optimizer parameter, an updated variance, and an updated momentum.

For a method for updating the optimizer parameter, the variance, and the momentum, refer to a conventional method. This is not limited.

The optimizer data update solution provided in this application includes: during initialization, ensuring that the optimizer data in the multiple groups is the same; and during model training, transmitting the gradient between the multiple groups, so that each dedicated processor performs an update based on the same optimizer data (previous PMV), a same input (gradient), and a same optimizer algorithm, and the updated optimizer data in the multiple groups is the same, that is, update results (current PMV) are the same. Because an amount of data of the gradient is far less than an amount of the optimizer data, for example, the amount of the data of the gradient is 1/6 of the amount of the optimizer data, transmitting only the gradient between the dedicated processors reduces bandwidth usage and an amount of transmitted data. The dedicated processor updates the optimizer data based on the gradient, ensuring that the updated optimizer data in the multiple groups is the same, thereby implementing "computation instead of transmission", and ensuring integrity of the optimizer data at any time.

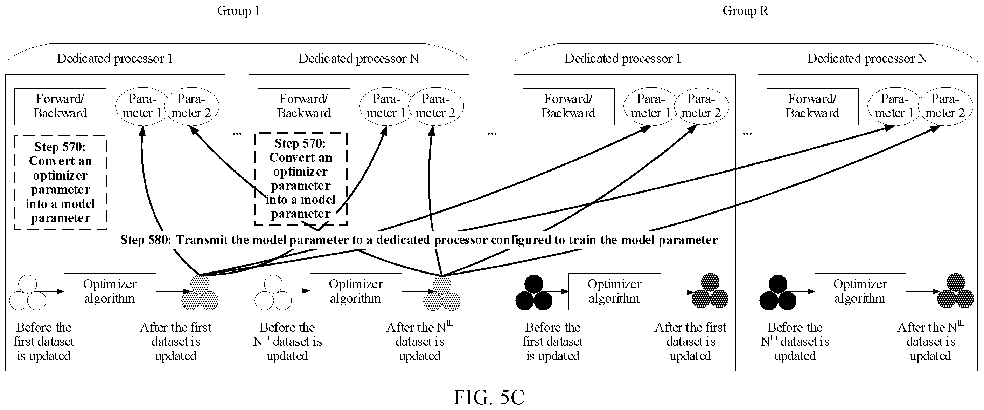

After the optimizer data is updated, the dedicated processor updates a model parameter. FIG. 5C shows a process of updating a model parameter. The method includes the following step 570 and step 580.

### Step 570: The dedicated processor converts an optimizer parameter into a model parameter.

The dedicated processor converts a single-precision optimizer parameter into a half-precision model parameter. For example, an optimizer parameter fp32 is converted into a model parameter fp16.

### Step 580: The dedicated processor transmits the model parameter to a dedicated processor configured to train the model parameter.

After converting the single-precision optimizer parameter into the half-precision model parameter, the dedicated processor performs an AllGather operation. For example, all the dedicated processors in the R groups include a model parameter P1. The dedicated processor 1 in the group 1 transmits the model parameter P1 to each dedicated processor in the R groups. All the dedicated processors in the R groups include a model parameter P2. The dedicated processor 2 in the group 1 transmits the model parameter P2 to each dedicated processor in the R groups.

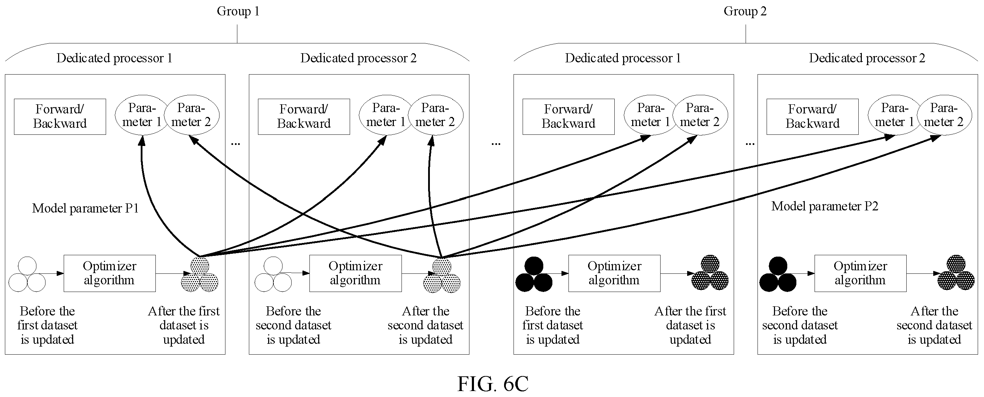

For example, as shown in FIG. 6C, both the dedicated processor 1 and the dedicated processor 2 in the group 1 and the dedicated processor 1 and the dedicated processor 2 in the group 2 include the model parameter P1 and the model parameter P2. The dedicated processor 1 in the group 1 converts the single-precision optimizer parameter into the half-precision model parameter P1, and transmits the model parameter P1 to the dedicated processor 1 and the dedicated processor 2 in the group 1, and the dedicated processor 1 and the dedicated processor 2 in the group 2. The dedicated processor 2 in the group 1 converts the single-precision optimizer parameter into the half-precision model parameter P2, and transmits the model parameter P2 to the dedicated processor 1 and the dedicated processor 2 in the group 1, and the dedicated processor 1 and the dedicated processor 2 in the group 2.

In this way, it is ensured that the optimizer data is consistent with the model parameter, and that the model training is correct.

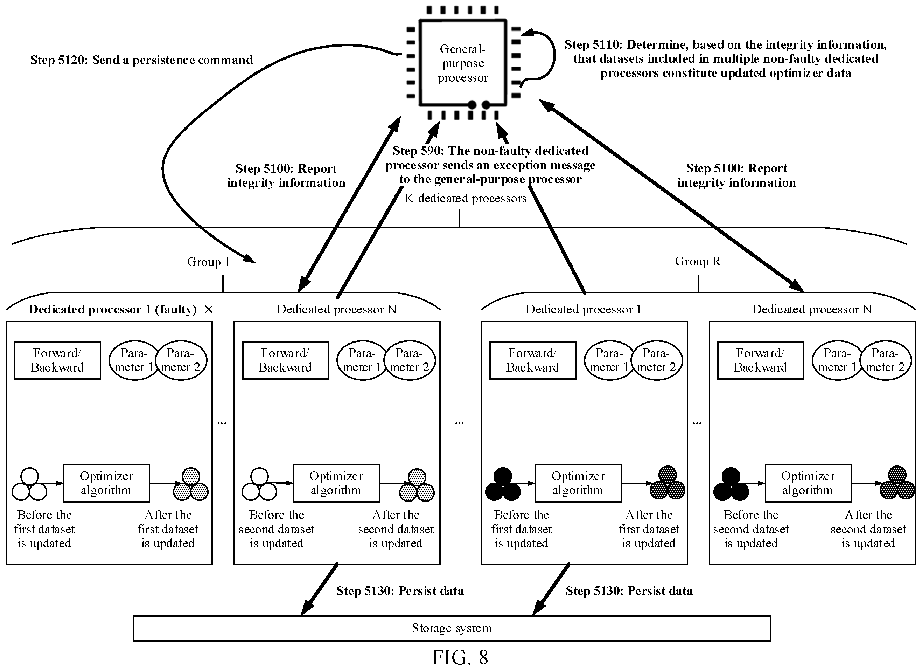

In some other embodiments, after a dedicated processor in the system is faulty, a non-faulty dedicated processor may persist a final checkpoint without saving the model parameter. As shown in FIG. 8, this application further includes the following step 590 to step 5130.

Herein, it is assumed that the dedicated processor 1 in the group 1 is faulty, and a non-faulty dedicated processor perceives that an abnormal dedicated processor exists in the computing system. The general-purpose processor instructs to persist datasets included in multiple non-faulty dedicated processors, and the datasets contained in the multiple non-faulty dedicated processors constitute the updated optimizer data. The multiple non-faulty dedicated processors include the first dedicated processor, and the updated optimizer data includes an updated first dataset. The datasets contained in the multiple non-faulty dedicated processors include the updated first dataset.

### Step 590: The non-faulty dedicated processor sends an exception message to the general-purpose processor.

If a dedicated processor in the computing system is faulty, other non-faulty dedicated processors may not be able to receive data sent by the faulty dedicated processor. In this case, a non-faulty dedicated processor perceives that an abnormal dedicated processor exists in the computing system, and sends an exception message to the general-purpose processor. The exception message indicates that an abnormal dedicated processor exists in the system.

### Step 5100: The general-purpose processor instructs the non-faulty dedicated processor to report integrity information.

The general-purpose processor sends a report command to the non-faulty dedicated processor, and the non-faulty dedicated processor reports the integrity information to the general-purpose processor. The report command instructs the non-faulty dedicated processor to report the integrity information.

The integrity information indicates integrity of a dataset included in the non-faulty dedicated processor. For example, the integrity information includes an identifier and correctness information of data in the dataset. The integrity information further includes an iteration count of the data in the dataset included in the non-faulty dedicated processor.

### Step 5110: Determine, based on the integrity information sent by the non-faulty dedicated processors in the computing system, that the datasets contained in the multiple non-faulty dedicated processors constitute the updated optimizer data.

Because at least two copies of datasets included in the optimizer data are stored in the computing system, the integrity information received by the general-purpose processor may include same integrity information, that is, the at least two dedicated processors send a same identifier to the general-purpose processor. It should be noted that, if two copies of the datasets in the optimizer data are stored in the system and one dedicated processor is faulty, the general-purpose processor receives, from a non-faulty dedicated processor, integrity information of a dataset included in the faulty dedicated processor. The general-purpose processor may further receive, from other non-faulty dedicated processors, integrity information of two copies of datasets included in the non-faulty dedicated processors.

The general-purpose processor selects multiple consecutive identifiers from the received identifiers, and data indicated by the multiple consecutive identifiers constitutes the updated optimizer data.

The general-purpose processor determines non-faulty dedicated processors in which the data indicated by the multiple consecutive identifiers is located as the multiple non-faulty dedicated processors whose datasets constitute the updated optimizer data. The updated optimizer data includes an updated optimizer parameter, an updated variance, and an updated momentum.

It may be understood that the data included in the multiple non-faulty dedicated processors constitutes the complete optimizer data. In other words, the general-purpose processor determines, based on the multiple consecutive identifiers included in the integrity information, the dedicated processors whose datasets can constitute the complete optimizer data.

Optionally, the general-purpose processor may further determine, based on the correctness information included in the integrity information, that the data indicated by the multiple consecutive identifiers is correct, and therefore determine that the non-faulty dedicated processors in which the data indicated by the multiple consecutive identifiers is located are the multiple non-faulty dedicated processors whose datasets constitute the updated optimizer data.

Optionally, the integrity information further includes iteration counts. The general-purpose processor determines, based on the iteration counts included in the integrity information, that iteration counts of the data indicated by the multiple consecutive identifiers are the same, and therefore determines that the non-faulty dedicated processors in which the data indicated by the multiple consecutive identifiers is located are the multiple non-faulty dedicated processors whose datasets constitute the updated optimizer data.

It may be understood that, the multiple identifiers constituting the complete optimizer data, as determined by the general-purpose processor, are consecutive, and the iteration counts of the data indicated by the multiple identifiers are the same, and all the data is correct.

For example, the optimizer data includes the first dataset and the second dataset. The dedicated processor 1 in the group 1 and the dedicated processor 1 in the group 2 include the first dataset. The dedicated processor 2 in the group 1 and the dedicated processor 2 in the group 2 include the second dataset. When the dedicated processor 1 in the group 1 is faulty, the dedicated processor 1 in the group 2 reports integrity information of the first dataset to the general-purpose processor, and the dedicated processor 2 in the group 1 and the dedicated processor 2 in the group 2 report integrity information of the second dataset to the general-purpose processor. The general-purpose processor determines that the first dataset included in the dedicated processor 1 in the group 2 and the second dataset included in the dedicated processor 2 in the group 1 constitute the complete optimizer data. The general-purpose processor instructs the dedicated processor 1 in the group 2 to persist the first dataset, and instructs the dedicated processor 2 in the group 1 to persist the second dataset.

### Step 5120: The general-purpose processor sends a persistence command to the multiple non-faulty dedicated processors.

The persistence command instructs to persist the datasets included in the multiple non-faulty dedicated processors. The general-purpose processor instructs the multiple non-faulty dedicated processors to persist the datasets in the included optimizer data.

### Step 5130: The dedicated processors persist the data.

The dedicated processors receive the persistence command sent by the general-purpose processor, and persist the datasets in the optimizer data included in the dedicated processors to the storage system. For example, the optimizer data includes the first dataset and the second dataset. The first dataset in the optimizer data included in the dedicated processor 1 is stored in the storage system, and the second dataset in the optimizer data included in the dedicated processor 2 is stored in the storage system. The storage system may store the optimizer data in a form of a file.

It may be understood that the storage system stores the final checkpoint, that is, stores the complete optimizer data in the system when the dedicated processor is faulty, where the optimizer data includes the updated optimizer parameter, the updated variance, and the updated momentum.

Therefore, there are multiple replicas of the optimizer data globally. When a dedicated processor is faulty, since the system includes multiple copies of the optimizer data, complete optimizer data can be formed from the datasets included in the non-faulty dedicated processors. This ensures integrity of the optimizer data when the dedicated processor is faulty, improves reliability of the optimizer data, and ensures accuracy of the final checkpoint, so that model training can be resumed based on the final checkpoint, thereby reducing training loss.

Optionally, the foregoing embodiment is described by using an example in which the general-purpose processor performs step 5100 to step 5130. In some embodiments, the general-purpose processor may further specify a dedicated processor to perform step 5100 to step 5130.

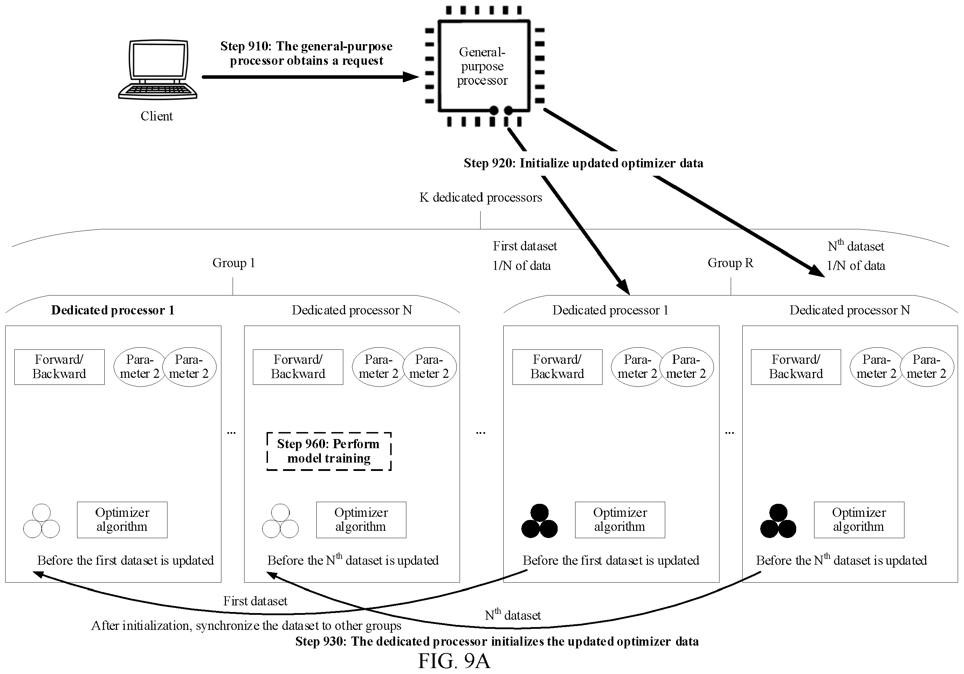

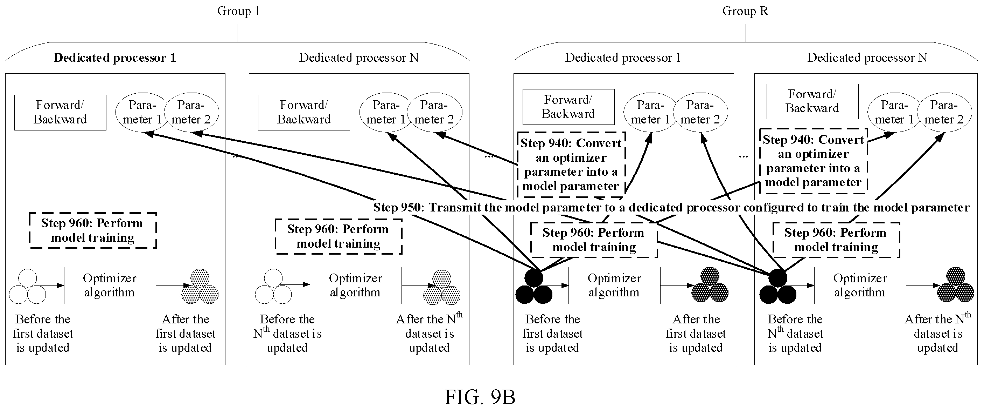

In some other embodiments, after the dedicated processor in the system is faulty, the dedicated processor may resume model training based on the final checkpoint. FIG. 9A and FIG. 9B are a schematic flowchart of a data processing method according to this application. Resumption of model training is mainly described herein. FIG. 9A shows an initialization process before a dedicated processor performs model training, and the method includes the following step 910 to step 930. After optimizer data is updated, the dedicated processor updates a model parameter. FIG. 9B shows a process of updating a model parameter. The method includes the following step 940 to step 960.

### Step 910: A general-purpose processor obtains a request.

The general-purpose processor obtains a request sent by a client, where the request instructs to resume model training. The request may include a model identifier, so that the general-purpose processor identifies a model based on the model identifier, and instructs a dedicated processor to load, from a storage system, the model indicated by the model identifier.

The general-purpose processor may obtain optimizer data from the storage system. Because the general-purpose processor instructs the dedicated processor to resume model training, that is, when the dedicated processor performs resumable training, the general-purpose processor obtains updated optimizer data from the storage system, where the updated optimizer data includes an updated value of an optimizer parameter, an updated value of a momentum, and an updated value of a variance. The updated optimizer data may be optimizer data included in a final checkpoint.

### Step 920: The general-purpose processor initializes the updated optimizer data.

The general-purpose processor may group dedicated processors in a system to obtain multiple groups. The general-purpose processor selects one group from the multiple groups, and partitions the updated optimizer data based on a quantity of dedicated processors in a group, where each dedicated processor in the group includes a portion of the updated optimizer data. At least two dedicated processors belonging to different groups include the same updated optimizer data. Each group includes a copy of the complete updated optimizer data, and the multiple groups include multiple complete copies of the updated optimizer data, thereby achieving multiple replicas of the updated optimizer data globally. For description of initializing the dedicated processor by the general-purpose processor, refer to the description of step 520.

It should be noted that, dedicated processors included in each group after the current grouping may be the same as or different from dedicated processors included in each group after previous grouping. This is not limited. After a faulty dedicated processor is recovered, the current grouping may also include the recovered dedicated processor.

### Step 930: The dedicated processor initializes the updated optimizer data.

The dedicated processor in the group transmits configured optimizer data to a dedicated processor in another group, so that the dedicated processor in the another group includes the updated optimizer data. In this way, each group includes a copy of the complete updated optimizer data, and multiple complete copies of the updated optimizer data are included in the multiple groups, thereby achieving multiple replicas of the optimizer data globally.

It should be noted that step 930 is an optional step. In some embodiments, the general-purpose processor may further re-obtain the updated optimizer data from the storage system, partition the updated optimizer data into N portions based on a quantity N of dedicated processors in another group, and configure 1/N of the updated optimizer data for one dedicated processor in the another group.

### Step 940: The dedicated processor converts an optimizer parameter into a model parameter.

The dedicated processor converts a single-precision optimizer parameter into a half-precision model parameter. For example, an optimizer parameter fp32 is converted into a model parameter fp16.

### Step 950: The dedicated processor transmits the model parameter to a dedicated processor configured to train the model parameter.

The dedicated processor transmits a gradient to a dedicated processor including optimizer data whose identifier is the same as an identifier of the gradient. For a description of step 950, refer to the description of step 580.

### Step 960: The dedicated processor trains the model.

Because only the optimizer data but no model parameter is saved in the final checkpoint, during the resumption of model training, the model parameter is computed based on the optimizer data in the storage system, and then the model parameter is transmitted to the dedicated processor configured to train the model parameter, thereby ensuring that the optimizer data at the final checkpoint is consistent with the model parameter and overcoming a problem that the optimizer data is inconsistent with the model parameter due to an AllGather operation failure when a dedicated processor is faulty. In addition, according to the method provided in this application, a checkpoint during a fault can be saved, and model training can be resumed based on the checkpoint during the fault, thereby effectively reducing training loss and improving model training efficiency.

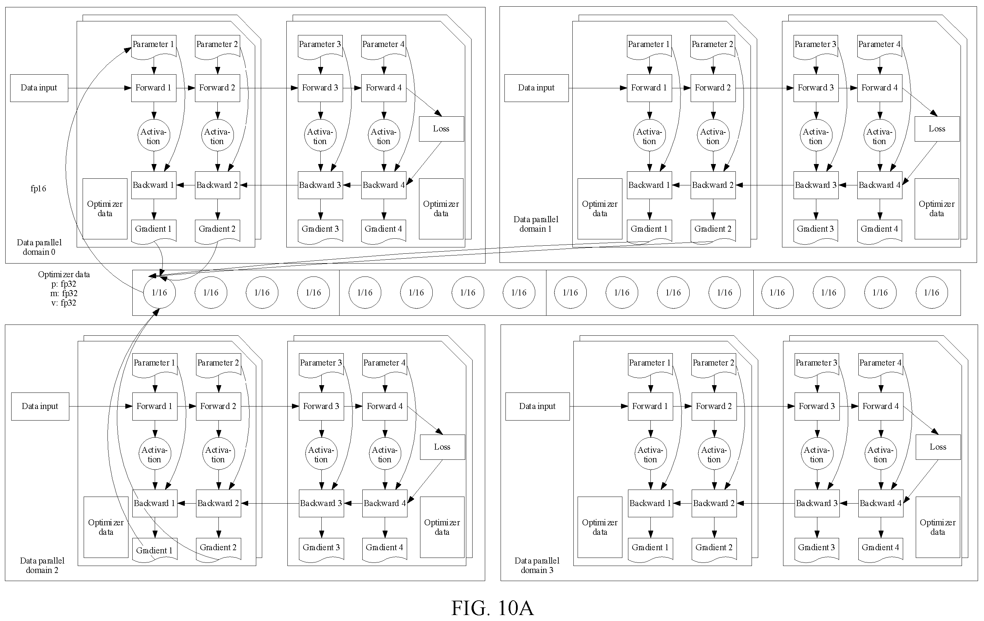

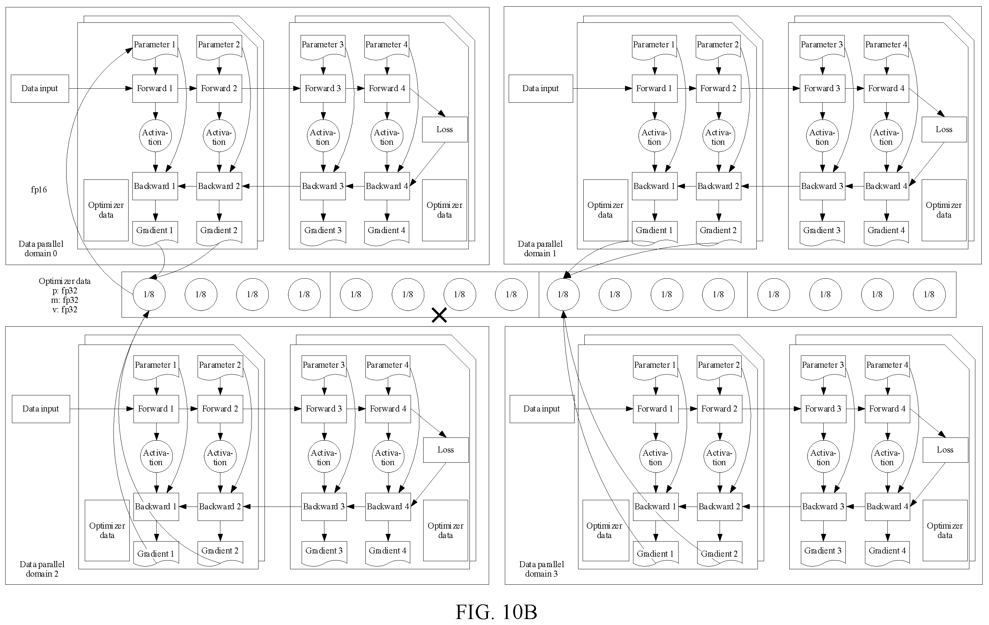

FIG. 10A and FIG. 10B are diagrams of comparison of storage of optimizer data according to this application. As shown in FIG. 10A, all cards in a computing system are grouped into four data parallel domains, and each data parallel domain includes four cards. The optimizer data includes M optimizer parameters, M variances, and M momentums. The optimizer data is partitioned into 16 portions, and each card includes one portion, where each portion is 1/16 of the data.

As shown in FIG. 10B, all the cards in the computing system are grouped into two groups, and the optimizer data is partitioned into eight datasets. One card in each group includes one dataset. Each dataset includes M/8 optimizer parameters, M/8 variances, and M/8 momentums. Gradients generated by the cards in the four data parallel domains are transmitted to cards including optimizer data whose identifiers are the same as identifiers of the gradients, in groups 1 and 2.

Therefore, if a copy of the optimizer data is achieved in a brute-force approach, an amount of transmitted data is 12M, that is, an amount of the entire optimizer data. According to the method provided in this application, an amount of transmitted data is 2M, that is, an amount of gradient data. At least two copies of the optimizer data are deployed globally, thereby achieving multiple replicas of the optimizer data globally.

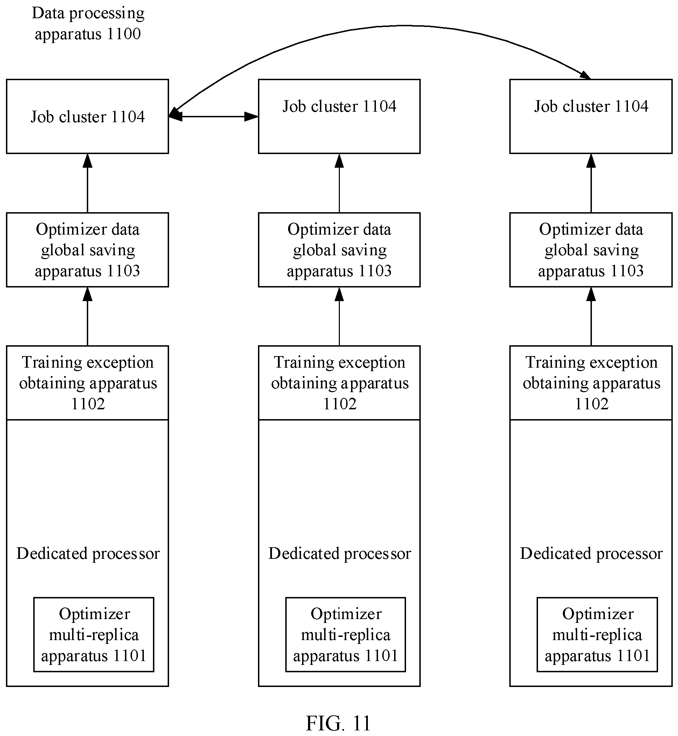

FIG. 11 is a diagram of a data processing apparatus 1100 according to this application. In a model training process, an optimizer multi-replica apparatus 1101 is configured to perform computation instead of transmission, to update multiple replicas of optimizer data, and ensure integrity of the optimizer data at any time.

When a system exception occurs, a saving process of a final checkpoint includes a training exception obtaining apparatus 1102, an optimizer data global saving apparatus 1103, and a distributed job cluster (job cluster) 1104. The training exception obtaining apparatus 1102 is configured to perceive the system exception. The optimizer data global saving apparatus 1103 is configured to store a dataset in the optimizer data.

The job cluster 1104 is configured to perform health status detection of a worker, perform an integrity check, and deliver a final checkpoint persistence command.

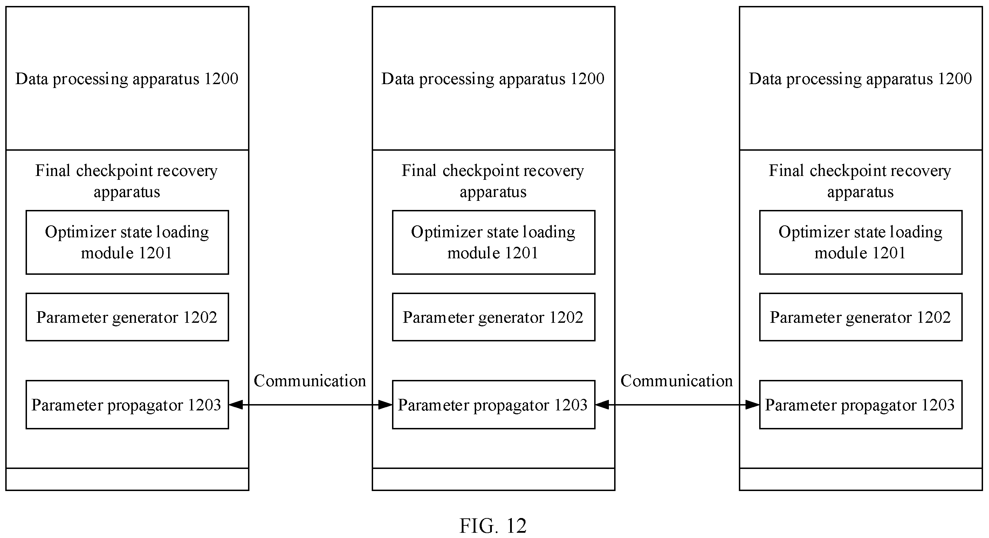

FIG. 12 is a diagram of another data processing apparatus according to this application. The data processing apparatus 1200 includes a final checkpoint recovery apparatus. The final checkpoint recovery apparatus includes an optimizer state loading module 1201, a parameter generator 1202, and a parameter propagator 1203.

The optimizer state loading module 1201 is configured to read optimizer data from a final checkpoint file and synchronize a replica of the optimizer data.

The parameter generator 1202 is configured to generate a model parameter based on an optimizer parameter. The optimizer data includes the optimizer parameter, but types of the optimizer parameter and the model parameter are inconsistent. For example, the optimizer parameter is fp32, but a model parameter fp16 is used in forward and backward operations. If the optimizer parameter is inconsistent with the model parameter, fp32 is converted into fp16.

The parameter propagator 1203 is configured to synchronize the model parameter to all corresponding training workers by using a communication operation. After propagation of the model parameter is complete, a training iteration can start.

For descriptions of functions of the apparatuses in the data processing apparatuses shown in FIG. 11 and FIG. 12, refer to descriptions in the foregoing embodiments.

It may be understood that, to implement functions in the foregoing embodiments, a computer device includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

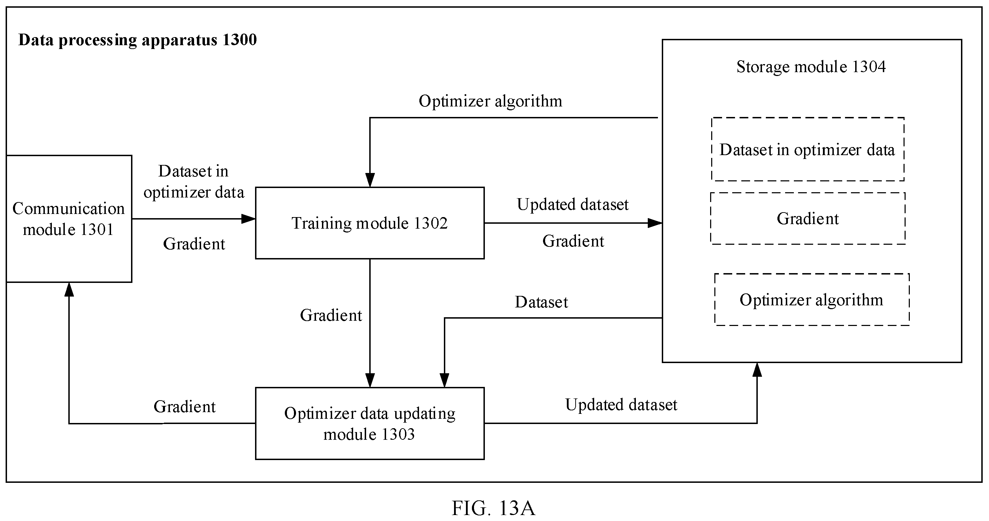

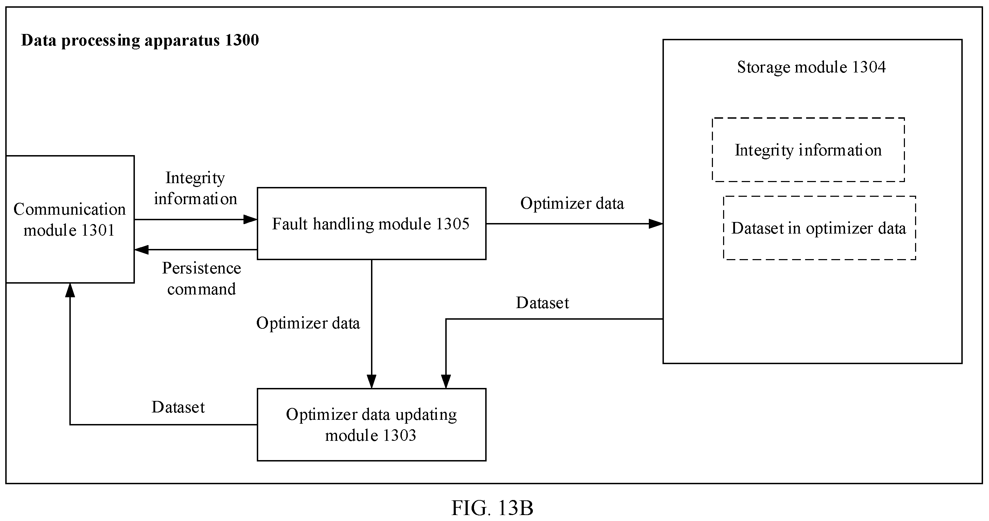

The foregoing describes, in detail with reference to FIG. 1 to FIG. 13B, the data processing methods provided in this application. The following describes, with reference to FIG. 13A and FIG. 13B, apparatuses provided in this application. These apparatuses may be configured to implement the functions of the dedicated processor or the general-purpose processor in the foregoing method embodiments, and therefore can also achieve beneficial effects of the foregoing method embodiments. In this embodiment, the apparatuses may be dedicated processors or general-purpose processors shown in FIG. 5A to FIG. 5C, FIG. 8, or FIG. 9A and FIG. 9B, or may be modules (for example, chips) applied to computer devices.

As shown in FIG. 13A, a data processing apparatus 1300 includes a communication module 1301, a training module 1302, an optimizer data updating module 1303, and a storage module 1304.

The data processing apparatus 1300 is configured to implement the functions of the dedicated processor in the method embodiments shown in FIG. 5A to FIG. 5C, FIG. 8, and FIG. 9A and FIG. 9B.

The training module 1302 is configured to train an artificial intelligence model to obtain a first gradient. For example, the training module 1302 is configured to perform step 960 in FIG. 9B and step 540 in FIG. 5B.

The optimizer data updating module 1303 is configured to update a first dataset based on the first gradient, to obtain an updated first dataset. For example, the optimizer data updating module 1303 is configured to perform step 560 in FIG. 5B.

Optionally, the communication module 1301 is configured to transmit the first gradient. For example, the communication module 1301 is configured to perform step 550 in FIG. 5B.

Optionally, the communication module 1301 is further configured to obtain an initial value of the first dataset configured by a general-purpose processor. For example, the communication module 1301 is configured to perform step 510 in FIG. 5A.

Optionally, the optimizer data updating module 1303 is further configured to convert an optimizer parameter in the updated first dataset into a model parameter. For example, the optimizer data updating module 1303 is configured to perform step 570 in FIG. 5C and step 940 in FIG. 9B.

Optionally, the communication module 1301 is further configured to transmit the model parameter to a dedicated processor that is in a computing system and that is configured to train the model parameter. For example, the communication module 1301 is configured to perform step 580 in FIG. 5C and step 950 in FIG. 9B.

Optionally, the optimizer data updating module 1303 is further configured to persist the included dataset. For example, the optimizer data updating module 1303 is configured to perform step 5130 in FIG. 8.

Optionally, the communication module 1301 is further configured to obtain the initial value of the first dataset. For example, the communication module 1301 is configured to perform step 530 in FIG. 5A.

The storage module 1304 is configured to store a dataset in optimizer data, a gradient, an optimization algorithm, and the like, to facilitate model training.

As shown in FIG. 13B, a data processing apparatus 1300 is configured to implement the functions of the general-purpose processor in the method embodiment shown in FIG. 8.

The data processing apparatus 1300 includes a communication module 1301, a fault handling module 1305, an optimizer data updating module 1303, and a storage module 1304.

When a dedicated processor in a system is faulty, the fault handling module 1305 is configured to instruct to persist datasets included in multiple non-faulty dedicated processors, where the datasets contained in the multiple non-faulty dedicated processors constitute updated optimizer data, the multiple non-faulty dedicated processors include a first dedicated processor, and the updated optimizer data includes an updated first dataset. For example, the fault handling module 1305 is configured to perform step 5110 in FIG. 8.

Optionally, the communication module 1301 is configured to obtain integrity information sent by the non-faulty dedicated processors in the computing system, where the integrity information indicates integrity of the datasets included in the non-faulty dedicated processors. For example, the communication module 1301 is configured to perform step 5100 in FIG. 8.

Optionally, when instructing to persist the datasets included in the multiple non-faulty dedicated processors, the fault handling module 1305 is specifically configured to determine, based on the integrity information sent by the non-faulty dedicated processors in the computing system, that the datasets contained in the multiple non-faulty dedicated processors constitute the updated optimizer data.

Optionally, the communication module 1301 is further configured to send a persistence command to the multiple non-faulty dedicated processors, where the persistence command instructs to persist the datasets included in the multiple non-faulty dedicated processors. For example, the communication module 1301 is configured to perform step 5120 in FIG. 8.

Optionally, the integrity information includes identifiers and correctness information of data in the datasets; and when determining, based on the integrity information sent by the non-faulty dedicated processors in the computing system, that the datasets contained in the multiple non-faulty dedicated processors constitute the updated optimizer data, the fault handling module 1305 is specifically configured to: determine multiple consecutive identifiers based on the identifiers included in the integrity information sent by the non-faulty dedicated processors in the computing system, where data indicated by the multiple consecutive identifiers constitutes the updated optimizer data; determine, based on the correctness information included in the integrity information, that the data indicated by the multiple consecutive identifiers is correct; and determine non-faulty dedicated processors in which the data indicated by the multiple consecutive identifiers is located as the multiple non-faulty dedicated processors whose datasets constitute the updated optimizer data.

Optionally, the integrity information further includes iteration counts of data in the datasets included in the non-faulty dedicated processors; and the fault handling module 1305 is further configured to determine, based on the iteration counts included in the integrity information, that iteration counts of the data indicated by the multiple consecutive identifiers are the same.

Optionally, the communication module 1301 is further configured to obtain the updated optimizer data when model training is restarted; and the optimizer data updating module 1303 is configured to configure the updated first dataset for the first dedicated processor.

Optionally, the communication module 1301 is further configured to configure the updated first dataset for a third dedicated processor.

The storage module 1304 is configured to store integrity information, a dataset in optimizer data, and the like.

It should be understood that the data processing apparatus 1300 in this embodiment of this application may be implemented by using an application-specific integrated circuit (application-specific integrated circuit, ASIC), or implemented by using a programmable logic device (programmable logic device, PLD). The PLD may be a complex programmable logical device (complex programmable logic device, CPLD), a field programmable gate array (field programmable gate array, FPGA), generic array logic (generic array logic, GAL), or any combination thereof. When the methods shown in FIG. 5A to FIG. 5C, FIG. 8, and FIG. 9A and FIG. 9B are alternatively implemented by using software, the modules of the apparatus may also be software modules, and a computation graph optimization apparatus 900 and modules of the computation graph optimization apparatus 900 may also be software modules.

The data processing apparatus 1300 according to this embodiment of this application may correspondingly perform the methods described in embodiments of this application, and the foregoing and other operations and/or functions of units in the data processing apparatus 1300 are respectively used to implement corresponding procedures of the methods in FIG. 5A to FIG. 5C, FIG. 8, and FIG. 9A and FIG. 9B. For brevity, details are not described herein again.

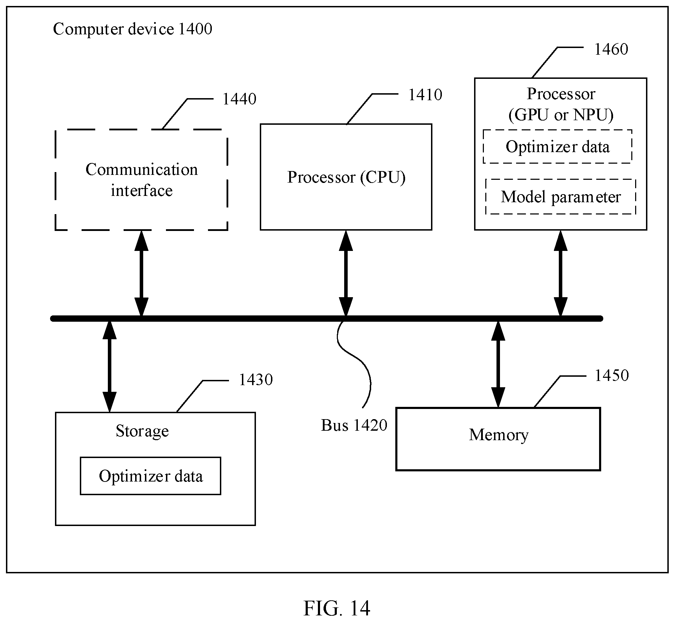

FIG. 14 is a diagram of a structure of a computer device 1400 according to this application. As shown in FIG. 14, the computer device 1400 includes a processor 1410, a bus 1420, a storage 1430, a communication interface 1440, a memory 1450 (which may also be referred to as a main memory (main memory) unit), and a processor 1460. The processor 1410, the processor 1460, the storage 1430, the memory 1450, and the communication interface 1440 are connected by the bus 1420.

It should be understood that, in this embodiment, the processor 1410 may be a CPU, or the processor 1410 may be another general-purpose processor, a digital signal processor (digital signal processor, DSP), an ASIC, an FPGA or another programmable logic device, a discrete gate or a transistor logic device, a discrete hardware component, or the like. The general-purpose processor may be a microprocessor or any conventional processor or the like.

The computer device 1400 may further include a graphics processing unit (graphics processing unit, GPU), a neural network processing unit (neural network processing unit, NPU), a microprocessor, an ASIC, or one or more integrated circuits configured to control program execution in the solutions of this application. For example, the processor 1460 may be a GPU or an NPU.

The communication interface 1440 is configured to implement communication between the computer device 1400 and an external device or a component.

In this application, when the computer device 1400 is configured to implement functions of the dedicated processor shown in FIG. 5A to FIG. 5C, FIG. 8, and FIG. 9A and FIG. 9B, the communication interface 1440 is configured to transmit a gradient, an initial value, and the like, so that the processor 1460 is configured to train a model, update optimizer data, and persist a final checkpoint.

When the computer device 1400 is configured to implement functions of the general-purpose processor shown in FIG. 5A to FIG. 5C, FIG. 8, and FIG. 9A and FIG. 9B, the communication interface 1440 is configured to transmit integrity information and the like, so that the processor 1410 is configured to instruct to persist datasets included in multiple non-faulty dedicated processors.

The bus 1420 may include a path, configured to transmit information between the foregoing components (such as the processor 1410, the memory 1450, and the storage 1430). In addition to a data bus, the bus 1420 may further include a power bus, a control bus, a status signal bus, and the like. However, for clarity of description, various buses are marked as the bus 1420 in the figure. The bus 1420 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), or the like. The bus 1420 may be classified into an address bus, a data bus, a control bus, and the like.

In an example, the computer device 1400 may include multiple processors. The processor may be a multi-core (multi-CPU) processor. The processor herein may be one or more devices, circuits, and/or computing units configured to process data (for example, computer program instructions).

It should be noted that, in FIG. 14, only an example in which the computer device 1400 includes one processor 1410 and one storage 1430 is used. Herein, the processor 1410 and the storage 1430 each indicate a type of component or device. In a specific embodiment, a quantity of components or devices of each type may be determined based on a service requirement. For example, the computer device 1400 includes multiple GPUs or NPUs.

The memory 1450 may be a volatile memory pool or a non-volatile memory pool, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), and an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1450 is configured to store optimizer data, gradients, and the like.

The storage 1430 may correspond to a storage medium, for example, a magnetic disk such as a mechanical hard disk or a solid state drive, configured to store information such as the optimizer data in the foregoing method embodiments.

The computer device 1400 may be a general-purpose device or a dedicated device. For example, the computer device 1400 may alternatively be a server or another device having a computing capability.

It should be understood that the computer device 1400 according to this embodiment may correspond to the data processing apparatus 1300 in this embodiment, and may correspond to a corresponding body that performs any method in FIG. 5A to FIG. 5C, FIG. 8, and FIG. 9A and FIG. 9B. In addition, the foregoing and other operations and/or functions of the modules in the data processing apparatus 1300 are respectively used to implement corresponding procedures of the methods in FIG. 5A to FIG. 5C, FIG. 8, and FIG. 9A and FIG. 9B. For brevity, details are not described herein again.

The method steps in embodiments may be implemented by hardware, or may be implemented by the processor by executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium or write information into the storage medium. Certainly, the storage medium may alternatively be a component of the processor. The processor and the storage medium may be located in an ASIC. In addition, the ASIC may be located in a computing device. Certainly, the processor and the storage medium may alternatively exist in the computing device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions according to embodiments of this application are all or partially performed. The computer may be a general-purpose computer, a dedicated computer, a computer network, a network device, user equipment, or another programmable apparatus. The computer program or instructions may be stored in a computer-readable storage medium or may be transmitted from one computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, such as a server or a data center, integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid state drive (solid state drive, SSD). The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, applied to a computing system, wherein the computing system comprises a general-purpose processor and multiple dedicated processors, the multiple dedicated processors are configured to train an artificial intelligence model, the multiple dedicated processors comprise at least two copies of optimizer data, the optimizer data comprises a first dataset, the multiple dedicated processors comprise a first dedicated processor and a second dedicated processor, both the first dedicated processor and the second dedicated processor comprise the first dataset, and the method comprises:
training, by the first dedicated processor, the artificial intelligence model to obtain a first gradient;
updating, by the first dedicated processor, the first dataset based on the first gradient, to obtain an updated first dataset;
updating, by the second dedicated processor, the first dataset based on the first gradient, to obtain the updated first dataset; and
when the second dedicated processor is faulty, instructing, by the general-purpose processor, to persist datasets comprised in multiple non-faulty dedicated processors, wherein the datasets contained in the multiple non-faulty dedicated processors constitute updated optimizer data, the multiple non-faulty dedicated processors comprise the first dedicated processor, and the updated optimizer data comprises the updated first dataset.

2. The method according to claim 1, wherein instructing, by the general-purpose processor, to persist the datasets contained in the multiple non-faulty dedicated processors comprises:
obtaining integrity information sent by the non-faulty dedicated processors in the computing system, wherein the integrity information indicates integrity of the datasets comprised in the non-faulty dedicated processors;
determining, based on the integrity information sent by the non-faulty dedicated processors in the computing system, that the datasets contained in the multiple non-faulty dedicated processors constitute the updated optimizer data; and
sending a persistence command to the multiple non-faulty dedicated processors, wherein the persistence command instructs to persist the datasets comprised in the multiple non-faulty dedicated processors.

3. The method according to claim 2, wherein the integrity information comprises identifiers and correctness information of data in the datasets; and
determining, based on the integrity information sent by the non-faulty dedicated processors in the computing system, that the datasets contained in the multiple non-faulty dedicated processors constitute the updated optimizer data comprises:
determining multiple consecutive identifiers based on the identifiers comprised in the integrity information sent by the non-faulty dedicated processors in the computing system, wherein data indicated by the multiple consecutive identifiers constitutes the updated optimizer data;
determining, based on the correctness information comprised in the integrity information, that the data indicated by the multiple consecutive identifiers is correct; and
determining non-faulty dedicated processors in which the data indicated by the multiple consecutive identifiers is located as the multiple non-faulty dedicated processors whose datasets constitute the updated optimizer data.

4. The method according to claim 3, wherein the integrity information further comprises iteration counts of data in the datasets comprised in the non-faulty dedicated processors; and
the method further comprises:
determining, based on the iteration counts comprised in the integrity information, that iteration counts of the data indicated by the multiple consecutive identifiers are the same.

5. The method according to any one of claims 1 to 4, wherein the method further comprises:
obtaining, by the first dedicated processor, an initial value of the first dataset configured by the general-purpose processor; and
obtaining, by the second dedicated processor, the initial value of the first dataset sent by the first dedicated processor.

6. The method according to any one of claims 1 to 5, wherein the optimizer data further comprises a second dataset, the multiple dedicated processors comprise a third dedicated processor and a fourth dedicated processor, and both the third dedicated processor and the fourth dedicated processor comprise the second dataset.

7. The method according to any one of claims 1 to 6, wherein after instructing, by the general-purpose processor, to persist the datasets comprised in the multiple non-faulty dedicated processors, the method further comprises:
when model training is restarted, obtaining, by the general-purpose processor, the updated optimizer data;
configuring, by the general-purpose processor, the updated first dataset for the first dedicated processor; and
configuring, by the general-purpose processor, the updated first dataset for the third dedicated processor.

8. The method according to claim 7, wherein the method further comprises:
converting, by the first dedicated processor, an optimizer parameter in the updated first dataset into a model parameter; and
transmitting, by the first dedicated processor, the model parameter to a dedicated processor that is in the computing system and that is configured to train the model parameter.

9. The method according to any one of claims 1 to 8, wherein the method further comprises:
transmitting, by the first dedicated processor, the first gradient to the second dedicated processor.

10. The method according to any one of claims 1 to 9, wherein the optimizer data comprises an optimizer parameter and an optimizer state, and the optimizer state comprises a variance and a momentum.

11. A computer device, wherein the computer device comprises a memory and multiple processors, the memory is configured to store a set of computer instructions, and when the processors execute the set of computer instructions, the multiple processors jointly perform operation steps of the method according to any one of claims 1 to 10.
